# EUROPEAN PATENT APPLICATION

(11) **EP 2 058 748 A1**
(43) Date of publication of application: **13.05.2009**
(21) Application number: 06797197.8
(22) Date of filing: 31.08.2006
(51) Int. Cl.: G06F 21/20

(54) **NETWORK CONNECTED TERMINAL DEVICE AUTHENTICATING METHOD, NETWORK CONNECTED TERMINAL DEVICE AUTHENTICATING PROGRAM AND NETWORK CONNECTED TERMINAL DEVICE AUTHENTICATING APPARATUS**

(71) Applicant: Fujitsu Limited, Kawasaki-shi, Kanagawa 211-8588 (JP)
(72) Inventor: ISHIKAWA, Mizuma, Yokohama-shi Kanagawa 222-0033 (JP); KOTANI, Seigo, Kawasaki-shi Kanagawa 211-8588 (JP); MIWA, Hidenari, Yokohama-shi Kanagawa 222-0033 (JP)
(74) Representative: Holtby, Christopher Lawrence
(86) International application number: PCT/JP2006/317237
(87) International publication number: WO 2008/026288

(57) **Abstract**

A directory server device (200) having received from a user terminal device A (100a) a network connection demand and terminal device environment information demands an authenticating server device (300) to authenticate the user terminal device A (100a). The authenticating server device (300) transmits the result of authenticating the user terminal device A (100a) to the directory server device (200) in response to an authentication demand from the directory server device (200), and, when the authentication is positive, transmits connection destination information that is information on the path to a terminal device of the connection destination in a network N.

## Description

### TECHNICAL FIELD

The present invention relates to a network connection terminal authentication method, a network connection terminal authentication program, and a network connection terminal authenticating apparatus that authenticate a terminal device that demands communication with another terminal device in a computer network.

### BACKGROUND ART

Conventionally, a technique has been proposed in which, when a service is provided from a service provider device of a service provider to a user terminal device of a user through a computer network, the service is provided after terminal environment such as a hardware or a software related to the user terminal device is authenticated to secure safety of the service.

For example, Patent Document 1 discloses a technique in which in a service provider device, environment information of a user terminal device (information about a software incorporated in the user terminal device (OS, BIOS, browser, plug-in software, and the like), a hardware (CPU, memory, PCI board, and the like), a peripheral device connected to the user terminal device, and the like) are acquired from the user terminal device. Then, it is confirmed whether a software (for example, a software about which security hole is not taken care of) or a hardware that damages safety of the user terminal device is incorporated, whether a peripheral device that damages safety of the user terminal device is connected, or the like, and a service is not provided to a user terminal device that cannot ensure safety due to the possibility of information leakage, or the like. A computer network configured by using the technique is called a quarantine network.

[Patent Document 1] Japanese Laid-open Patent Publication No. 2004-157790.

### DISCLOSURE OF INVENTION

### PROBLEM TO BE SOLVED BY THE INVENTION

However, with conventional techniques represented by Patent Document 1, the degree of freedom of configuration of the quarantine network is restricted because it is assumed that the authentication function of confirming safety of a user terminal device and rejecting to provide a service to a user terminal device that has not been able to ensure safety is arranged on a path of the quarantine network.

In particular, in the recent computer network, unlike a conventional client-server system in which a service provider side and a client side are distinguished, any computer can be a service provider side and a client side in a peer-to-peer relationship. Moreover, numbers of computers to authenticate and computers to be authenticated tend to be large, and the authentication function is needed to be provided for every path between a computer to authenticate and a computer to be authenticated; therefore, efficiency of implementing the authentication function is low, and efficiency of the process of the authentication function may also be lowered.

The present invention has been made to solve the issues (problems), and an object of the present invention is to provide a network connection terminal authentication method, a network connection terminal authentication program, and a network connection terminal authenticating apparatus that can improve efficiency of implementing the authentication function of authenticating a computer that demands connection with the computer network in a quarantine network, and efficiency of the process of the authentication function.

### MEANS FOR SOLVING PROBLEM

To solve the problems described above and achieve the object, the present invention is a network connection terminal authenticating method that authenticates a terminal device that demands communication with other terminal device in a computer network. The network connection terminal authenticating method includes a terminal device authentication step of authenticating the terminal device outside a communication path between the terminal device and the other terminal device in response to a demand for communication of the terminal device with the other terminal device and determining whether communication with the other terminal device is permitted, and a data transmission step of starting transmission of data from the terminal device to the other terminal device when the terminal device is authenticated in the terminal device authentication step.

The above invention further includes a communication path information notification step of notifying the terminal device of information of the communication path between the terminal device and the other terminal device, the information being stored outside the communication path between the terminal device and the other terminal device, when the terminal device is authenticated in the terminal device authentication procedure.

In the invention, in the communication path information notification step, authentication information indicating that the terminal device has been authenticated in the terminal device authentication step is notified together with the communication path information.

In the above invention, in the data transmission step, the authentication information is added to data to be transmitted to the other terminal device and is transmitted.

The above invention further includes a re-authentication demanding step of demanding re-authentication of the terminal device based on the authentication information added to the data in a relay device having received the data in the communication path between the terminal device and the other terminal device indicated by the communication path information or the other terminal device, wherein in the terminal device authentication step, the terminal device is re-authenticated in response to a demand in the re-authentication demanding step, and it is determined whether communication with the other terminal device is permitted.

The above invention further includes a data transfer step of transferring from the relay device to other relay device or the other terminal device the data together with the authentication information when the terminal device is re-authenticated in the terminal device authentication step.

In the invention, in the data transmission step, together with the authentication information, an authentication item based on which the authentication is performed is further added and transmitted.

The above invention further includes a re-authentication demanding step of demanding re-authentication of the terminal device based on an authentication item about which the relay device is demanded in authentication of the terminal device other than the authentication item added to the data, in the relay device having received the data in the communication path between the terminal device and the other terminal device indicated by the communication path information, wherein in the terminal device authentication step, the terminal device is re-authenticated in response to a demand in the re-authentication demanding step, and it is determined whether communication with the other terminal device is permitted.

The above invention further includes a data transfer step of further adding an authentication item based on which the relay device has authenticated the terminal device to the data and the authentication information, and transferring the data and the authentication information from the relay device to the other relay device or the other terminal device when the terminal device is re-authenticated in the terminal device authentication step.

The present invention is a network connection terminal authentication program that authenticates a terminal device that demands communication with other terminal device in a computer network. The program causes a computer to perform: a terminal device authentication procedure of authenticating the terminal device outside a communication path between the terminal device and the other terminal device in response to a demand for communication of the terminal device with the other terminal device and determining whether communication with the other terminal device is permitted, and a data transmission procedure of starting transmission of data from the terminal device to the other terminal device when the terminal device is authenticated in the terminal device authentication procedure.

The above invention further causes the computer to perform a communication path information notification procedure of notifying the terminal device of information of the communication path between the terminal device and the other terminal device, the information being stored outside the communication path between the terminal device and the other terminal device, when the terminal device is authenticated in the terminal device authentication procedure.

In the invention, in the communication path information notification procedure, authentication information indicating that the terminal device has been authenticated in terminal device authentication procedure is notified together with the communication path information.

In the invention, in the data transmission procedure, the authentication information is added to data to be transmitted to the other terminal device and is transmitted.

The above invention further causes the computer to perform a re-authentication demanding procedure of demanding re-authentication of the terminal device based on the authentication information added to the data in a relay device having received the data in the communication path between the terminal device and the other terminal device indicated by the communication path information or the other terminal device, wherein in the terminal device authentication procedure, the terminal device is re-authenticated in response to a demand in the re-authentication demanding procedure, and it is determined whether communication with the other terminal device is permitted.

The above invention further causes the computer to perform a data transfer procedure of transferring from the relay device to the other relay device or the other terminal device the data together with the authentication information when the terminal device is re-authenticated in the terminal device authentication procedure.

In the invention, in the data transmission procedure, together with the authentication information, an authentication item based on which the authentication is performed is further added and transmitted.

The above invention further includes a re-authentication demanding procedure of demanding re-authentication of the terminal device based on an authentication item about which the relay device is demanded in authentication of the terminal device other than the authentication item added to the data, in the relay device having received the data in the communication path between the terminal device and the other terminal device indicated by the communication path information, wherein in the terminal device authentication procedure, the terminal device is re-authenticated in response to a demand in the re-authentication demanding procedure, and it is determined whether communication with the other terminal device is permitted.

The above invention further includes a data transfer procedure of further adding an authentication item based on which the relay device has authenticated the terminal device to the data and the authentication information, and transferring the data and the authentication information from the relay device to the other relay device or the other terminal device when the terminal device is re-authenticated in the terminal device authentication procedure.

The present invention is a network connection terminal authenticating apparatus that authenticates a terminal device that demands communication with other terminal device in a computer network. The network connection terminal authenticating apparatus includes a terminal device authenticating unit that authenticates the terminal device outside the communication path between the terminal device and the other terminal device in response to a demand for communication between the terminal device and the other terminal device, and that determines whether communication with the terminal device is permitted.

In the invention, the terminal device authenticating unit re-authenticates the terminal device in response to a demand from a relay device arranged on a communication path between the terminal device and the other terminal device or from the other terminal device, and determines whether communication with the other terminal device is permitted.

The present invention is a communication path information memory device that stores information about a communication path between a terminal device that demands communication with another terminal device in a computer network and the other terminal device. The communication path information memory device includes a communication path information notifying unit that notifies the terminal device of the communication path information when the terminal device is authenticated by a network connection terminal authenticating apparatus that authenticates the terminal device in the computer network.

In the invention, the communication path information notifying unit notifies authentication information indicating that the terminal device has been authenticated by the network connection terminal authenticating apparatus together with the communication path information.

The present invention is a terminal device that demands a network connection terminal authenticating apparatus arranged outside a communication path with another terminal device in a computer network to authenticate the terminal device. The terminal device includes a data transmitting unit that starts transmission of data to the other terminal device when the terminal device is authenticated by the network connection terminal authenticating apparatus, wherein the data transmitting unit adds authentication information indicating that the terminal device has been authenticated by the network connection terminal authenticating apparatus to the data, and transmits the data.

In the invention, the data transmitting unit further adds an authentication item based on which the network connection terminal authenticating apparatus has authenticated the terminal device to the data, and transmits the data.

The present invention is a relay device that is arranged on a communication path between a terminal device and another terminal device, and that relays data transmitted by the terminal device to the other terminal device in response to the terminal device having been authenticated by a network connection terminal authenticating apparatus. The relay device includes a re-authentication demanding unit that demands re-authentication of the terminal device based on authentication information, added to the data, indicating that the terminal device has been authenticated by the network connection terminal authenticating apparatus.

The above invention further includes a data transferring unit that transfers the data to another relay device or the other terminal device together with the authentication information when a network connection terminal authenticating apparatus that re-authenticates the terminal device in response to a demand from the terminal device and that determines whether communication with the other terminal device is permitted re-authenticates the terminal device.

The present invention is a relay device that is arranged on a communication path between a terminal device and another terminal device, and that relays data transmitted from the terminal device to the other terminal device in response to the terminal device having been authenticated by a network connection terminal authenticating apparatus. The relay device includes a re-authentication demanding unit that demands re-authentication of the terminal device based on an authentication item, added to the data, based on which the network connection terminal authenticating apparatus has authenticated the terminal device.

The above invention further includes a data transferring unit that adds the authentication item to the data and transfers the data to another relay device or the other terminal device when the terminal device is re-authenticated by the network connection terminal authenticating apparatus that re-authenticates the terminal device in response to a demand from the terminal device and determines whether communication with the other terminal device is permitted.

### EFFECT OF THE INVENTION

According to the present invention, before starting communication with another terminal device, the terminal device is authenticated outside the communication path of the communication, and if the authentication is positive, the communication with the other terminal device is started. Accordingly, it becomes possible to realize the authentication function without adding modification to equipment on the communication path, and to easily add a terminal device that becomes an authentication target, and the degree of freedom of configuration of a network that requires the authentication function increases.

Furthermore, according to the present invention, the communication path information concerning the communication path between a terminal device and another terminal device is notified to the terminal device only after the terminal device is authenticated; therefore, high security of the network communication can be ensured.

Furthermore, according to the present invention, authentication information indicating that the terminal device has been authenticated is notified to the terminal device together with the communication path information; therefore, it becomes possible to easily recognize that the terminal device is truly authenticated.

Furthermore, according to the present invention, the authentication information is added to data to be transmitted to another terminal device, and the data is transmitted; therefore, it becomes possible to easily recognize that the terminal device has been truly authenticated on the communication path.

Furthermore, according to the present invention, re-authentication of a terminal device is demanded based on the authentication information added to the data, and it is determined whether communication with another terminal device is permitted; therefore, even communication data that has been authenticated positive, and has been transmitted is re-authenticated, and it becomes possible to exclude fraudulent communication data more strictly; thereby, security can be improved.

Moreover, according to the present invention, because the terminal device transfers communication data to another relay device or another terminal device only after re-authentication, high security of network communication can be assured. Moreover, it becomes possible to exclude fraudulent communication data in the middle of a communication path, and to suppress wasteful consumption of network bandwidth.

Furthermore, according to the present invention, the authentication item based on which authentication has been performed is further added to the communication data; therefore, it becomes possible to easily determine based on which authentication item the communication data passing a communication path is authenticated.

Furthermore, according to the present invention, the relay device to re-authenticate a terminal device based on an authentication item about which authentication of the terminal device is demanded other than an authentication item added to data, and it is determined whether communication with another terminal device is permitted; therefore, even communication data that has been authenticated positive, and has been transmitted is re-authenticated. Consequently, it becomes possible to exclude fraudulent communication data more strictly; whereby security can be improved. Furthermore, it becomes possible to avoid redundant re-authentication based on an authentication item based on which authentication has been performed, and to perform efficient authentication process.

Moreover, according to the present invention, because communication data is transferred to another relay device or another terminal device only after re-authentication of the terminal device, high security of network communication can be assured. Moreover, it becomes possible to exclude fraudulent communication data in the middle of a communication path, and to suppress wasteful consumption of network bandwidth. Furthermore, it becomes possible to clarify an authentication item based on which authentication has been performed, to avoid redundant re-authentication based on the authentication item afterwards, and to perform efficient authentication process.

### BRIEF DESCRIPTION OF DRAWINGS

[FIG. 1] FIG. 1 is a schematic for explaining the overview of a network connection terminal authentication system according to a first embodiment.
[FIG. 2] FIG. 2 is a schematic for explaining the overview of data exchange in the network connection terminal authentication system according to the first embodiment.
[FIG. 3] FIG. 3 is a functional block diagram of the configuration of a user terminal device 100 depicted in FIG. 1.
[FIG. 4] FIG. 4 is a schematic for explaining an environment information table 102a depicted in FIG. 3.
[FIG. 5] FIG. 5 is a functional block diagram for depicting the configuration of a directory server device 200 depicted in FIG. 1.
[FIG. 6-1] FIG. 6-1 is a schematic for explaining a token management table 202a depicted in FIG. 5.
[FIG. 6-2] FIG. 6-2 is a schematic for explaining a relay server device routing setting table 202b depicted in FIG. 5.
[FIG. 6-3] FIG. 6-3 is a schematic for explaining a relay server device list table 202c depicted in FIG. 5.
[FIG. 6-4] FIG. 6-4 is a schematic for explaining a connection terminal recording table 202d depicted in FIG. 5.
[FIG. 7] FIG. 7 is a functional block diagram of the configuration of an authenticating server device 300 depicted in FIG. 1.
[FIG. 8] FIG. 8 is a schematic for explaining a terminal device environment evaluation information table 302a depicted in FIG. 7.
[FIG. 9] FIG. 9 is a time chart of the processing procedure of a network connection terminal authentication process performed in the network connection terminal authentication system according to the first embodiment.
[FIG. 10] FIG. 10 is a schematic for explaining the overview of a network connection terminal authentication system according to a second embodiment.
[FIG. 11] FIG. 11 is a schematic for explaining the overview of data exchange in the network connection terminal authentication system according to the second embodiment.
[FIG. 12] FIG. 12 is a functional block diagram of the configuration of the directory server device 200 depicted in FIG. 10.
[FIG. 13] FIG. 13 is a functional block diagram of the configuration of a relay server device 400 depicted in FIG. 10.
[FIG. 14] FIG. 14 is a time chart of the processing procedures of a network connection terminal confirmation process performed in the network connection terminal authentication system according to the second embodiment.
[FIG. 15] FIG. 15 is a schematic for explaining the overview of a network connection terminal authentication system according to a third embodiment.
[FIG. 16] FIG. 16 is a schematic for explaining the structure of data exchanged in the network connection terminal authentication system depicted in Fig 15.
[FIG. 17] FIG. 17 is a functional block diagram of the configuration of the relay server device 400 depicted in FIG. 15.
[FIG. 18] FIG. 18 is a schematic for explaining a confirmation-requiring authentication item table 407a depicted in FIG. 17.
[FIG. 19] FIG. 19 is a flowchart of the processing procedures of a network connection terminal re-authentication demanding process performed between the authenticating server device 300, and the relay server device 400 in the network connection terminal authentication system according to the third embodiment.
[FIG. 20] FIG. 20 is a diagram of the hardware configuration of a computer system to become the user terminal device 100, the directory server device 200, the authenticating server device 300, or the relay server device 400 depicted in FIGS. 3, 5, 7, 12, and 13.

### EXPLANATIONS OF LETTERS OR NUMERALS

100 user terminal device
100a user terminal device A
100b user terminal device B
101 controlling unit
101a network connection demanding unit
101b environment information collecting unit
101c environment information transmitting unit
102 memory unit
102a environment information table
103 input/output control interface unit
104 communication control interface unit
105 input unit
106 output unit
200 directory server device
201 controlling unit
201a user terminal device authentication requesting unit
201b token generating unit
201c connection destination information transmitting unit
201d token authenticating unit
202 memory unit
202a token management table
202b relay server device routing setting table
202c relay server device list table
202d connection terminal recording table
203 input/output control interface unit
204 communication control interface unit
205 input unit
206 output unit
207 authenticating server device communication interface unit
300 authenticating server device
301 controlling unit
301a user terminal device hash value/evaluation value calculating unit
301b user environment collating unit
301b user terminal device environment collating unit
302 memory unit
302a terminal device environment evaluation information table
303 input/output control interface unit
304 communication control interface unit
305 input unit
306 output unit
400 relay server device
400a relay server device A
400b relay server device B
400c relay server device C
401 control unit
401a token collation requesting unit
401b communication data transfer processing unit
401c confirmed authentication item extracting unit
401d authentication demanding unit
401e confirmed authentication item information addition processing unit
402 input/output control interface unit
403 communication control interface unit
404 input unit
405 output unit
406 authenticating server device communication interface unit
407 memory unit
407a confirmation-requiring authentication item table

### BEST MODE(S) FOR CARRYING OUT THE INVENTION

A network connection terminal authentication method, a network connection terminal authentication program, and a network connection terminal authenticating apparatus according to first to third embodiments of the present invention will be explained in detail with reference to attached drawings. A network connection terminal authentication according to the present invention is implemented based on TNC (Trusted Network Connect). A network according to the present invention is configured based on SOBA (Session Oriented Broadband Applications). In other words, in the first to the third embodiments discussed below, the present invention is applied to implementation of TNC in a SOBA network. In particular, the network connection terminal authentication based on TNC in the following first to third embodiments is an authentication method in which a user terminal device is authenticated, and connection to a network is permitted when an evaluation value that evaluates a configuration of a hardware or a software incorporated in the user terminal device in terms of safety and performances is equal to or more than a certain level.

### First Embodiment

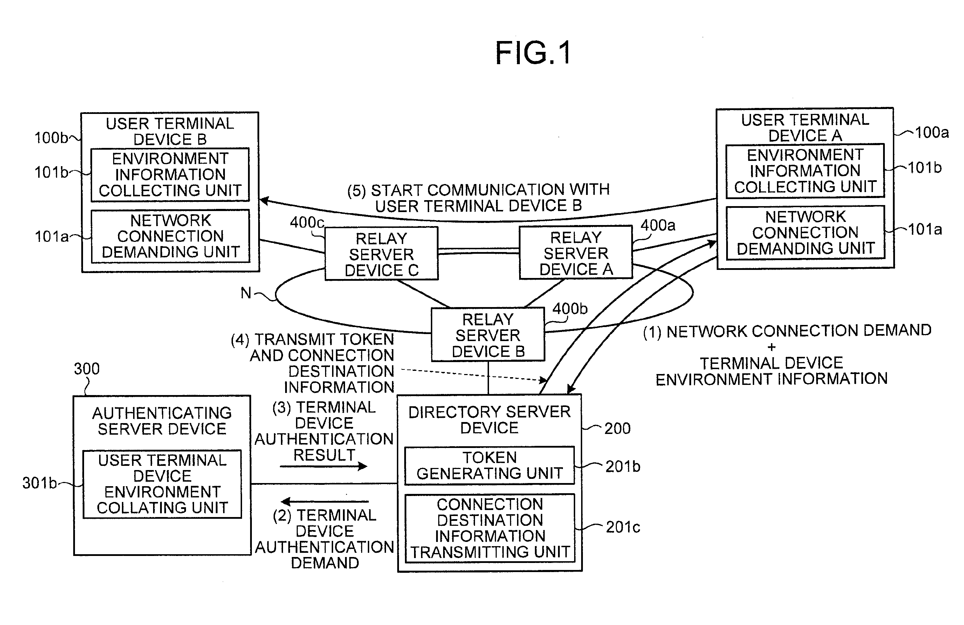

The first embodiment of the present invention will be explained with reference to FIGS. 1 to 9. In the first embodiment, a directory server device requests an authenticating server device to authenticate a user terminal device in response to a demand for information of a communication path to another user terminal device in a computer network issued to the directory server device before the user terminal device starts communication with the other user terminal device through the computer network, and the user terminal device starts communication with the other user terminal device in response to authentication of the user terminal device by the authenticating server device.

First, the overview of a network connection terminal authentication system according to the first embodiment will be explained. FIG. 1 is a schematic for explaining the overview of the network connection terminal authentication system according to the first embodiment. As depicted in FIG. 1, in the network connection terminal authentication system according to the first embodiment, a user terminal device A 100a, a user terminal device B 100b, and a directory server device 200 are connected in communication through a network N in which a relay server device A 400a, a relay server device B 400b, and a relay server device C 400c are arranged. The directory server device 200 is connected in communication with the authenticating server device 300 through a path different from the network N.

The user terminal device A 100a, and the user terminal device B 100b are for exchanging data with each other by direct operation performed by a user. In the first embodiment, the user terminal device A 100a is a terminal device on a data transmitter side, and the user terminal device B 100b is a terminal device on a data receiver side.

The directory server device 200 stores connection destination information that is information on a path from a user terminal device to another terminal device in the network N. The directory server device 200 is not present on a communication path between a user terminal device and another terminal device in the network N, and communication data does not pass the directory server device 200. The authenticating server device 300 determines comprehensively whether to authenticate a user terminal device and to admit connection to the network N according to a demand from the directory server device 200. Whether the directory server device 200 is to send the connection destination information to a user terminal device is determined according to authentication result from the authenticating server device 300. The relay server device A 400a, the relay server device B 400b, and the relay server device C 400c are arranged on the network N, and relay communication data exchanged among user terminal devices.

First, a network connection demand and terminal device environment information are transmitted from the user terminal device A 100a to the directory server device 200 (FIG. 1(1)). The network connection demand is transmitted to the directory server device 200 by a network connection demanding unit 101a of the user terminal device A 100a. The terminal device environment information depicts a hardware configuration and a software configuration of the user terminal device A 100a collected by an environment information collecting unit 101b of the user terminal device A 100a, and is transmitted to the directory server device 200 through a predetermined interface of the user terminal device A 100a.

The directory server device 200 demands the authenticating server device 300 to authenticate the user terminal device A 100a when having received a network connection demand and terminal device environment information from the user terminal device A 100a (FIG. 1(2)).

The authenticating server device 300 transmits to the directory server device 200 the result of authenticating the user terminal device A 100a in response to the authentication demand from the directory server device 200 (FIG. 1(3)). In the directory server device 200, a connection destination information transmitting unit 201c transmits, to the user terminal device A 100a, the connection destination information that is information on a path to a terminal device of a connection destination in the network N together with a token generated by a token generating unit 201b based on a terminal device authentication result received from the authenticating server device 300 (FIG. 1(4)).

The user terminal device A 100a starts communication with the user terminal device B 100b based on the information on a path in the network N indicated by the connection destination information when having received a token and the connection destination information from the directory server device 200 (FIG. 1(5). The path information depicts a path that passes the relay server device A 400a, and the relay server device B 400b. The user terminal device A 100a adds the token received from the directory server device 200 to data transmitted to the user terminal device B 100b.

Conventionally, each of the relay server devices 400 has the function of the authenticating server device 300. Accordingly, the authentication process is inefficient in that authentication is necessary every time communication data passes each relay server. In addition, if a user terminal is additionally provided, the additionally provided user terminal may not be authenticated unless an authentication function of a plurality of relay servers is prepared; therefore, development efficiency and maintenance efficiency are very low. Therefore, in the first embodiment, the authentication function is arranged at a position different from the path of the communication data in the network N, and authentication process is performed at the position comprehensively. Accordingly, it becomes possible to improve the efficiency of the authentication process, increase the degree of freedom of a network configuration, and improve the development efficiency and maintenance efficiency of the authentication function.

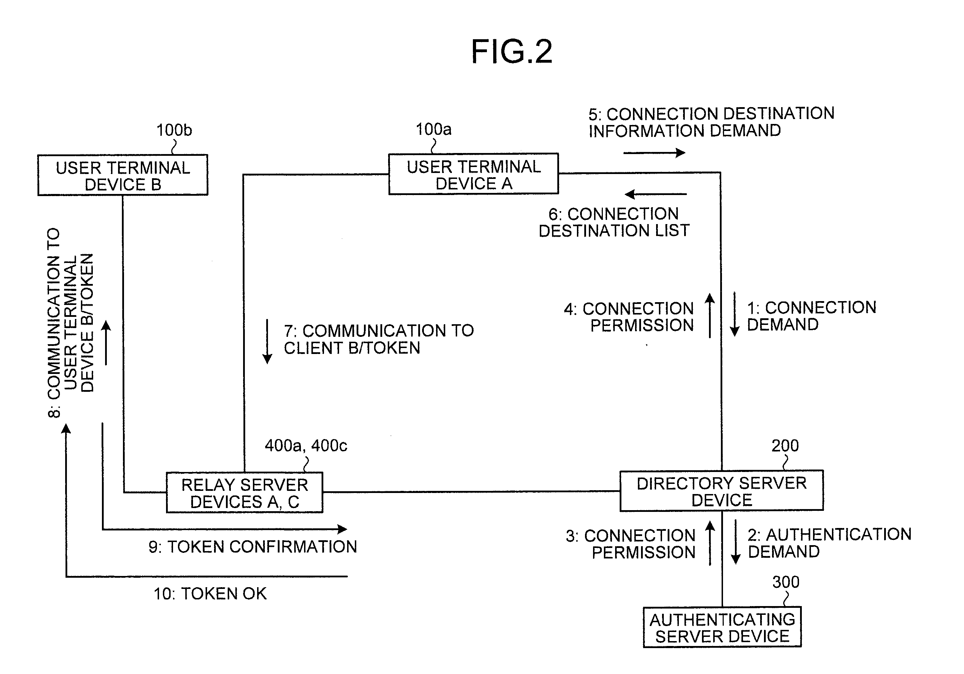

Next, data exchange in the network connection terminal authentication system according to the first embodiment will be explained. FIG. 2 is a schematic for explaining the overview of the data exchange in the network connection terminal authentication system according to the first embodiment. As depicted in FIG. 2, first, 1: a connection demand is transmitted from the user terminal device A 100a to the directory server device 200. Then, when the directory server device 200 receives the connection demand from the user terminal device A 100a, 2: the directory server device 200 transmits an authentication demand to the authenticating server device 300.

Then, the authenticating server device 300 transmits, to the directory server device 200, an authentication result of the user terminal device A 100a performed according to the authentication demand from the directory server device 200. Specifically, because connection to the network N is permitted by the authentication of the user terminal device A 100a in the authenticating server device 300, 3: the authenticating server device 300 transmits connection permission to the directory server device 200.

When the connection to the network N is not permitted by the authentication of the user terminal device A 100a in the authenticating server device 300, the authenticating server device 300 transmits connection refusal to the directory server device 200.

Then, 4: the directory server device 200 having received connection permission from the authenticating server device 300 transmits connection permission to the user terminal device A 100a. The connection permission transmitted from the directory server device 200 to the user terminal device A 100a includes a token. 5: The user terminal device A 100a having received the connection permission from the directory server device 200 transmits a connection destination information demand to the directory server device 200.

Then, 6: the directory server device 200 having received the connection destination information demand from the user terminal device A 100a transmits a connection destination list in which the connection destination information are listed. In this way, the user terminal device A 100a can transmit the communication data to the user terminal device B 100b.

As can be seen, the user terminal device A 100a acquires the connection destination list from the directory server device 200 prior to starting communication with the user terminal device B 100b because the user terminal device does not recognize the path on the network N from the user terminal device A 100a to the user terminal device of the communication partner that does not pass the directory server device 200. On the contrary, any user terminal device recognizes the communication path from the user terminal device to the directory server device 200 on the network N.

Next, 7: the user terminal device A 100a transmits the communication data to the user terminal device B 100b. At this time, the token received from the directory server device 200 is added to the communication data. The communication data transmitted from the user terminal device A 100a to the user terminal device B 100b passes the relay server device A 400a, and the relay server device C 400c, and arrives at the user terminal device B 100b according to the description of the connection destination list.

Then, 8: the relay server device C 400c having received, from the relay server device A 400a, communication data from the user terminal device A 100a to the user terminal device B 100b transfers the communication data to the user terminal device B 100b together with a token.

Lastly, 9: the user terminal device B 100b having received the communication data from the relay server device C 400c inquires of the directory server device 200 whether the token added to the communication data is correct. Although not depicted, the communication path between the user terminal device B 100b and the directory server device 200 passes through the relay server device B 400b and the relay server device C 400c.

Then, 10: the directory server device 200 having received the inquiry to confirm the token from the user terminal device B 100b transmits, when the token is correct, data indicating that the token is correct to the user terminal device B 100b. When the token is not correct, the directory server device 200 transmits data indicating that the token is not correct to the user terminal device B 100b. Thus, the user terminal device B 100b can trust the communication data from the user terminal device A 100a.

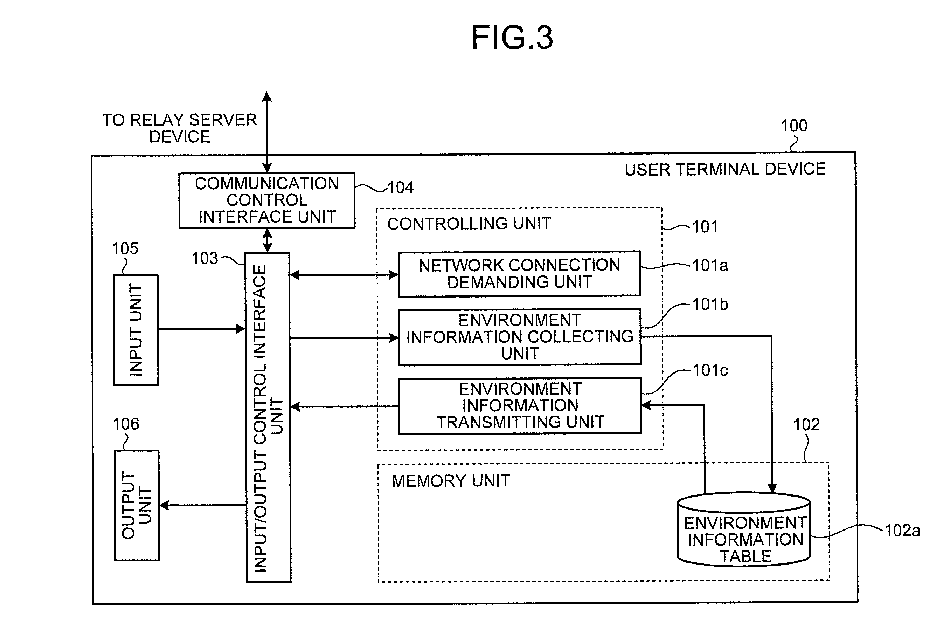

Next, the configuration of the user terminal device of the first embodiment will be explained. FIG. 3 is a functional block diagram of the configuration of the user terminal device 100 depicted in FIG. 1. As depicted in FIG. 3, the user terminal device 100 has a controlling unit 101, a memory unit 102, an input/output control interface unit 103, a communication control interface unit 104, an input unit 105 that receives input operation through a keyboard, a mouse, and the like, and an output unit 106 that is a display unit such as a display device.

The controlling unit 101 has an internal memory storing therein a program or control data defining a variety of processing procedures, and performs various processing through cooperation of these units. The controlling unit 101 has, in particular as those closely related to the present invention, the network connection demanding unit 101a, the environment information collecting unit 101b, and an environment information transmitting unit 101c.

The network connection demanding unit 101a transmits a network connection demand to the directory server device 200 based on operation received from the input unit 105. The environment information collecting unit 101b collects environment information at the time of startup of the user terminal device 100, or at the time of introducing a hardware or a software that is a target of the environment information, and registers the environment information in an environment information table 102a of the memory unit 102.

The environment information specifies a hardware and a software introduced into the user terminal device 100. The environment information transmitting unit 101c reads out the environment information for each software/hardware from the environment information table 102a after the network connection demanding unit 101a transmits a connection demand. Then, each piece of the environment information is transmitted to the directory server device 200 together with a hash value calculated based on each piece of the environment information.

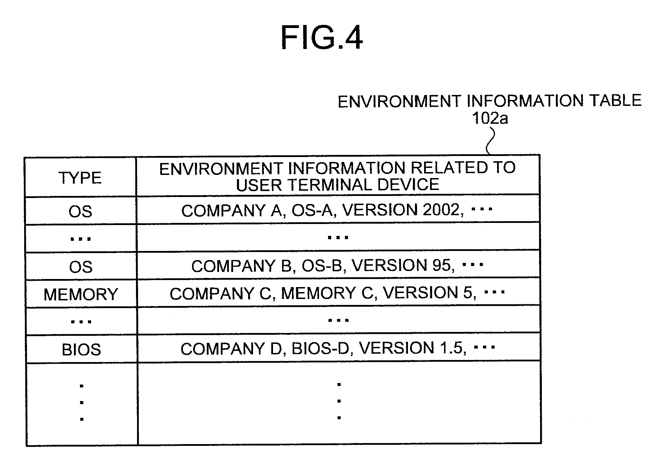

The memory unit 102 has the environment information table 102a. The environment information table 102a is a memory unit for storing information related to environment of the user terminal device 100, and specifically, as depicted in FIG. 4, stores environment information about a software incorporated in the user terminal device 100 (OS, BIOS, browser, plug-in software, and the like), a hardware (CPU, memory, PCI board, and the like), a hardware connected to the user terminal device 100, and the like. The environment information table 102a depicted in FIG. 4 has columns for types and environment information related to a user terminal device. The types are information indicating types of a hardware/software specified by environment information related to the terminal device (OS, BIOS, browser, plug-in software, CPU, memory, PCI board, and the like).

The user terminal device 100 collects the environment information at the time of startup of the user terminal device 100, and registers the environment information in the environment information table 102a, and when, after the startup, a software is additionally installed or a hardware is additionally connected, the user terminal device 100 collects environment information about the software or the hardware, and registers the environment information in the environment information table 102a.

The input/output control interface unit 103 mediates exchange of the communication data among the controlling unit 101, the communication control interface unit 104, the input unit 105, and the output unit 106.

The communication control interface unit 104 connects the user terminal device 100 with the network N, and in particular mediates connection with the relay server device 400.

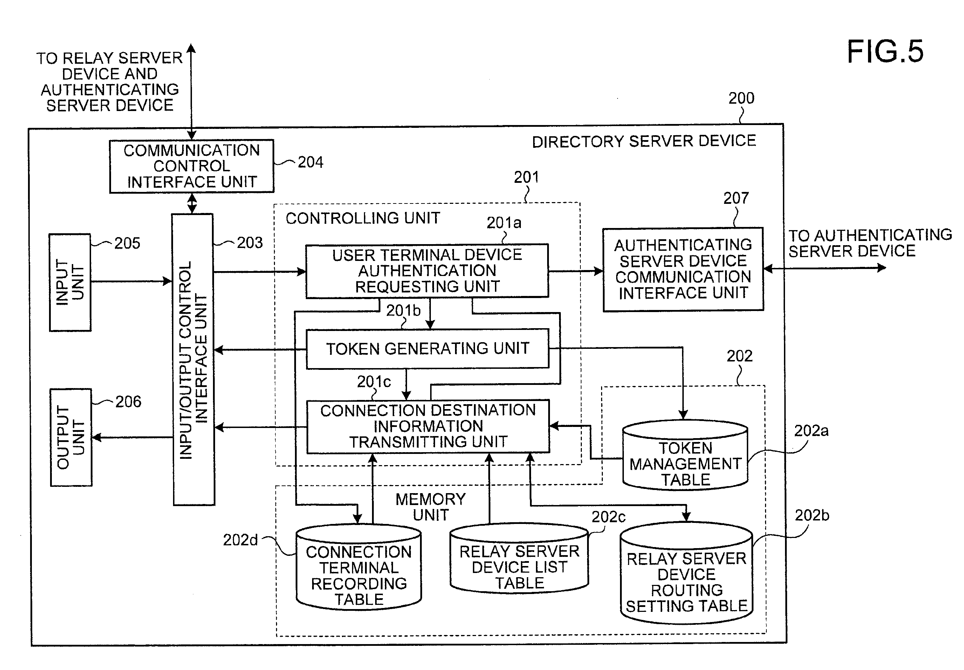

Next, the configuration of the directory server device 200 of the first embodiment will be explained. FIG. 5 is a functional block diagram of the configuration of the directory server device 200 depicted in FIG. 1. As depicted in FIG. 5, the directory server device 200 has a controlling unit 201, a memory unit 202, an input/output control interface unit 203, a communication control interface unit 204, an input unit 205, an output unit 206, and an authenticating server device communication interface unit 207.

The controlling unit 201 has an internal memory that stores therein a computer program and control data defining a variety of processing procedures, and performs various processing through cooperation of these units. The controlling unit 201 has, in particular as those closely related to the present invention, a user terminal device authentication requesting unit 201a, the token generating unit 201b, and the connection destination information transmitting unit 201c.

The user terminal device authentication requesting unit 201a having received the environment information together with a connection demand from the user terminal device 100 through the relay server device 400 transmits the environment information to the authenticating server device 300 through the authenticating server device communication interface unit 207. When it is determined that the authentication result of the user terminal device received from the authenticating server device 300 through the authenticating server device communication interface unit 207 indicates the connection to the network is permitted, the token generating unit 201b is instructed to generate a token, the connection destination information transmitting unit 201c is instructed to transmit the connection destination information, and terminal connection record is output to the connection terminal recording table 202d. When it is determined that the authentication result of the user terminal device indicates that the connection to the network is not permitted, instruction to output an error message is transmitted to the user terminal device 100 of the connection source. The user terminal device 100 having received the error message displays the error message on the output unit 106.

The token generating unit 201b having received the token generation instruction from the user terminal device authentication requesting unit 201a generates a token, outputs the token to the connection destination information transmitting unit 201c, and records the token in the token management table 202a.

The connection destination information transmitting unit 201c having received the instruction of transmission of the connection destination information from the user terminal device authentication requesting unit 201a creates the connection destination information in accordance with the user terminal device of the connection source having issued the connection demand and the user terminal device of the connection destination based on the token management table 202a and the connection terminal recording table 202d, and transmits the connection destination information to the user terminal device having issued the connection demand. The connection destination information includes a user terminal device identifier of the connection destination, and an IP address of the relay server device that is a gateway to the network N of the user terminal device.

At this time, the token generated by the token generating unit 201b is added to the connection destination information, and transmitted. Because the relay server device of a gateway in accordance with the user terminal device of the connection source and the user terminal device of the connection destination can be known by referring to the relay server device list table 202c, the IP address of the relay server device of the gateway is added to the connection destination information, and transmitted. The IP address of each of the relay server devices can be known by referring to the relay server device list table 202c.

The memory unit 202 has the token management table 202a, the relay server device routing setting table 202b, the relay server device list table 202c, and the connection terminal recording table 202d.

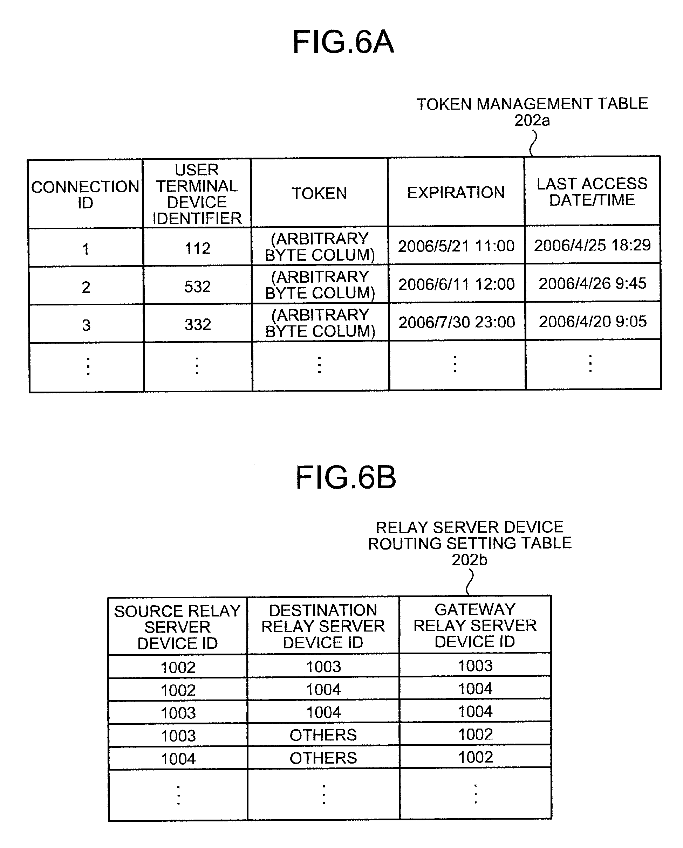

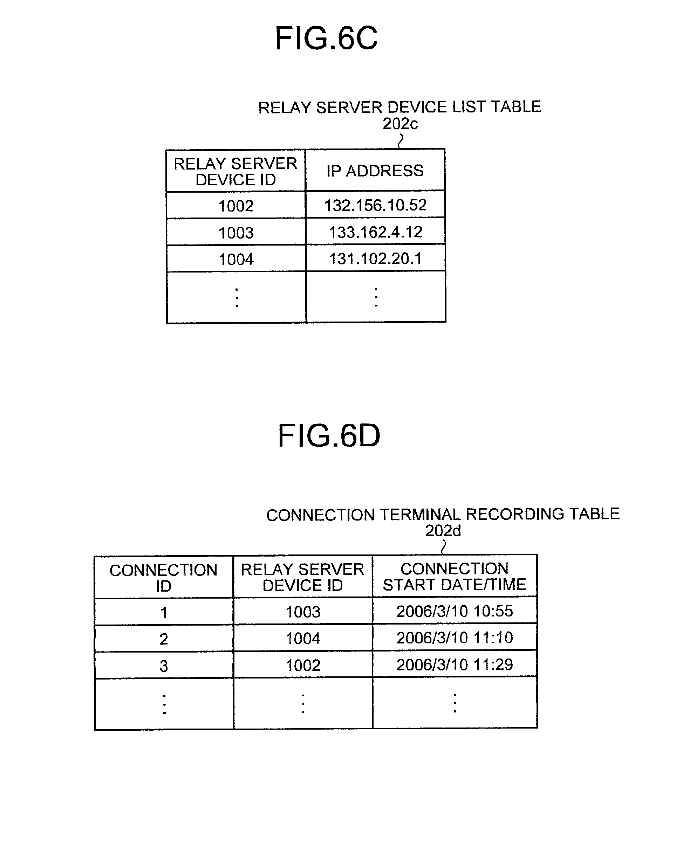

The token management table 202a is a memory unit for storing information related to a token generated by the token generating unit 201b, and specifically, as depicted in FIG. 6-1, stores a token that is an arbitrary byte column generated by the token generating unit 201b together with a connection ID, a user terminal device identifier, an expiration, and a last access date/time.

The connection ID is identification information for uniquely identifying a connection demand in the token management table 202a, and the connection terminal recording table 202d. By combining the connection IDs, the token management table 202a and the connection terminal recording table 202d can be associated with each other, and the relay server device of a gateway related to the user terminal device can be known. The user terminal device identifier is identification information for uniquely identifying the user terminal device having issued a connection demand related to the token. The expiration is a time limit for use of the token, and the last access date is the last date and time when the record is read or written.

The relay server device routing setting table 202b is a memory unit for storing information related to a relay server device to which the relay server device that is a gateway of the user terminal device of the connection source relays communication data based on the relay server device that is a gateway of the user terminal device of the connection source, and the relay server device that is a gateway of the user terminal device of the reconnection destination.

Specifically, as depicted in FIG. 6-2, the relay server device routing setting table 202b stores a source relay server device ID representing the relay server device of the user terminal device of the connection source, a destination relay server device ID representing the relay server device of the user terminal device of the connection destination, and a gateway relay server device ID. The gateway relay server device is a relay server device to which the source relay server device relays communication data determined by the source relay server device and the destination relay server device. These items are described as the relay server device IDs, and are converted into IP addresses by referring to the relay server device list.

The relay server device list table 202c stores the relay server device ID and the IP addresses in association with each other. As depicted in FIG. 6-3, the table stores the IP addresses of the relay server device.

The connection terminal recording table 202d stores communication identified with a connection ID together with the relay server device ID of the user terminal device of the connection source, and connection start date/time. As depicted in FIG. 6-4, the table stores the connection ID, the relay server device ID of the user terminal device of the connection source, and the connection start date/time when authorization by the authenticating server device 300 is positive, and communication with the connection destination user terminal device 100 starts, and deletes the record when the communication ends, thereby making it possible to know the user terminal device of the connection source that is currently performing communication. The user terminal device 100 registered in the connection terminal recording table 202d has passed the authorization by the authenticating server device 300, and is permitted to communicate with another terminal device that has similarly passed the authorization by the authenticating server device 300.

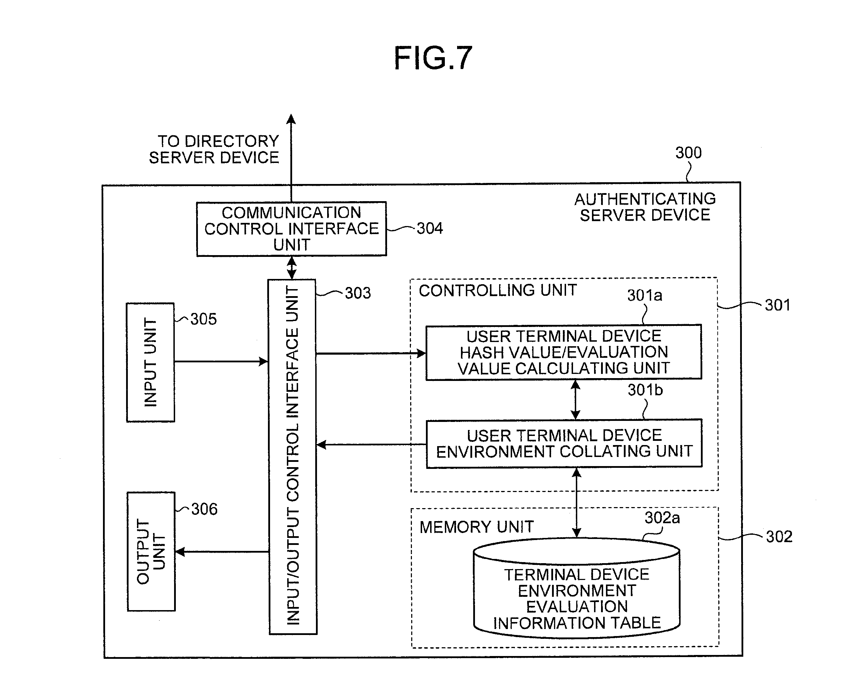

Next, the configuration of the authenticating server device of the first embodiment will be explained. FIG. 7 is a functional block diagram of the configuration of the authenticating server device 300 depicted in FIG. 1. As depicted in FIG. 7, the authenticating server device 300 has a controlling unit 301, a memory unit 302, an input/output control interface unit 303, a communication control interface unit 304, an input unit 305 that receives input operation through a keyboard, a mouse, or the like, and an output unit 306 that is a display unit such as a display device.

The controlling unit 301 has an internal memory that stores therein a computer program or control data defining a variety of processing procedures, and performs various processing through cooperation of these units. The controlling unit 301 has, in particular as those closely related to the present invention, a user terminal device hash value/evaluation value calculating unit 301a, and a user terminal device environment collating unit 301b.

The user terminal device hash value/evaluation value calculating unit 301a hashes environment information received from the user terminal device 100, and outputs the hashed environment information with the environment information received from the user terminal device 100, and the hash value to the user terminal device environment collating unit 301b.

The user terminal device environment collating unit 301b compares the hash value received from the user terminal device 100, and the environment information hashed by the user terminal device hash value/evaluation value calculating unit 301a to determine whether they match with each other. The evaluation values corresponding to all the environment information are read out, and the average is calculated by referring to the terminal device environment evaluation information table 302a based on the environment information received from the user terminal device 100. Whether the average is equal to or larger than a predetermined threshold is then determined. Not only the simple average of the evaluation values corresponding to all the environment information, but a weighted average or a sum may also be used.

The determination of consistency between the hash value received from the user terminal device 100 and the environment information hashed by the user terminal device hash value/evaluation value calculating unit 301a, and the determination that the average of the evaluation values corresponding to all the environment information is equal to or larger than the predetermined threshold made by the user terminal device environment collating unit 301b are collectively called authentication of the user terminal device 100. When the user terminal device environment collating unit 301b determines the consistency between the hash value received from the user terminal device 100 and the environment information hashed by the user terminal device hash value/evaluation value calculating unit 301a, and determines that the average of the evaluation values corresponding to all the environment information is equal to or larger than the predetermined threshold, the user terminal device is authenticated. The user terminal device environment collating unit 301b transmits to the user terminal device 100 information indicating that the user terminal device 100 is authenticated or not authenticated.

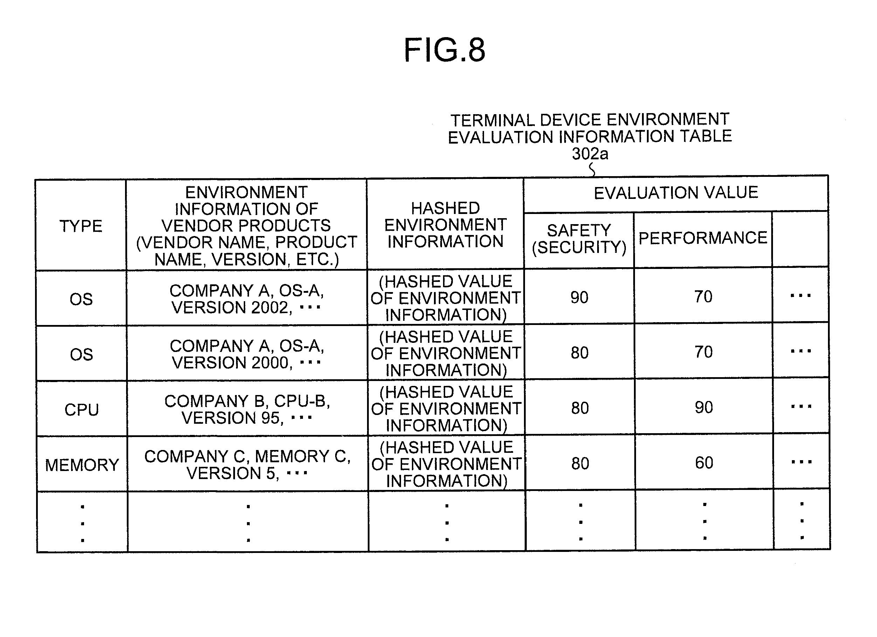

The memory unit 302 has a terminal device environment evaluation information table 302a. The terminal device environment evaluation information table 302a is a memory unit that stores information related to evaluation of software/hardware environment of the user terminal device 100, and specifically, as depicted in FIG. 8, stores types, environment information of vendor products, hashed environment information, and evaluation values in association with each other. The types are the same as those listed in the environment information table 102a in FIG. 4.

Among them, the "environment information" and the "hashed environment information" are registered in the terminal device environment evaluation information table 302a every time software or hardware information that may be incorporated in the user terminal device 100 (environment information) is obtained from the equipment vendor. The "evaluation values" are determined in terms of safety and performance based on vulnerability and capability of a vendor product when the vendor product is obtained, and are registered in association with the "environment information", and the "hashed environment information".

The "evaluation values" thus registered are reviewed, updated, and registered when a new vulnerability (security hole) is later found, or a newly developed product having higher performance is produced. In the first embodiment, the "evaluation values" include "safety evaluation values" determined in terms of security based on the vulnerability of a vendor product, and "performance evaluation values" determined in terms of performance based on capability of the vendor product.

The input/output control interface unit 303 mediates exchange of communication data among the controlling unit 301, the communication control interface unit 304, the input unit 305, and the output unit 306. The communication control interface unit 304 connects the authenticating server device 300 and the directory server device 200.

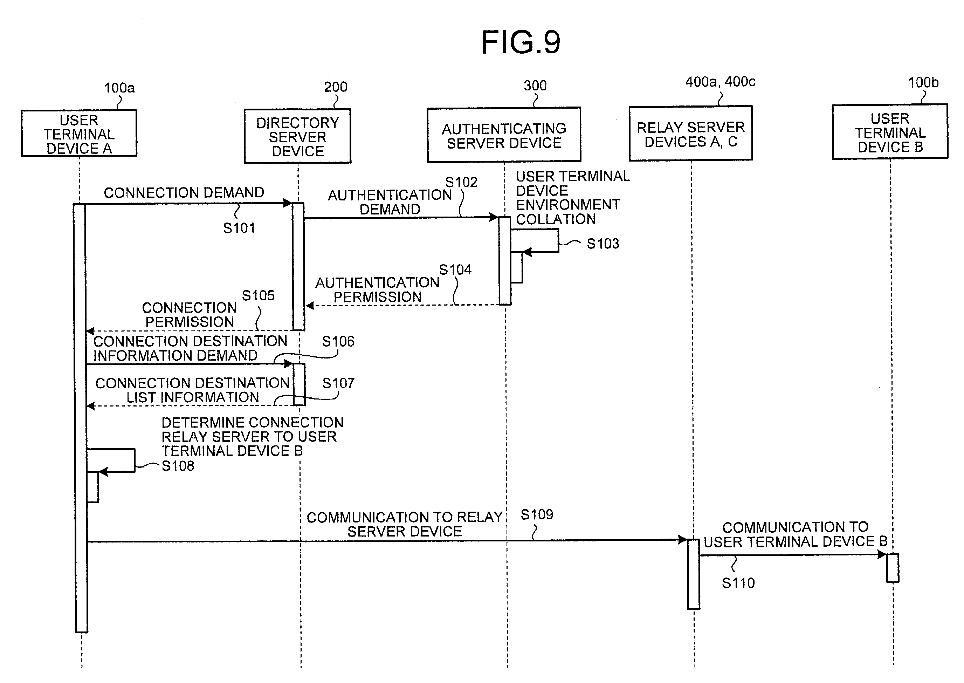

Next, the network connection terminal authentication process performed in the network connection terminal authentication system depicted in FIG. 1 will be explained. FIG. 9 is a time chart of the processing procedure of the network connection terminal authentication process performed in the network connection terminal authentication system depicted in FIG. 1.

As depicted in FIG. 9, first, the user terminal device A 100a transmits to the directory server device 200 a connection demand specifying the user terminal device B 100b as the connection destination user terminal device (Step S101). The directory server device 200 having received the connection demand transmits an authentication demand to the authenticating server device 300 (Step S102). The authenticating server device 300 having received the authentication demand performs user terminal device environment collating process in which the user terminal device is authenticated by comparing the hash value and determining the evaluation value of the terminal environment (Step S103).

Then, when the user terminal device is authenticated in the process of Step S103, the authenticating server device 300 notifies the directory server device 200 of information of permission of the authentication (Step S104). Then, the directory server device 200 having been notified by the authenticating server device 300 of the information of permission of authentication transmits to the user terminal device A 100a information that connection with the user terminal device B 100b is permitted (Step S105).

When the user terminal device A 100a is not authenticated in the process of Step S103, in place of the process at Step S104, the authenticating server device 300 transmits to the directory server device 200 information that authentication is not permitted. The directory server device 200 having been notified by the authenticating server device 300 of information that authentication is not permitted transmits to the user terminal device A 100a information that connection with the user terminal device B 100b is not permitted, in place of the process at Step S105.

Then, the user terminal device A 100a having received from the directory server device 200 information that connection with the user terminal device B 100b is permitted transmits a demand for connection destination information to the directory server device 200 (Step S106). The directory server device 200 having received the demand for connection destination information transmits to the user terminal device A 100a the connection destination list information (Step S107).

Then, the user terminal device A 100a determines a relay server device to become a gateway for connection to the user terminal device B based on the connection destination list information received from the directory server device 200 (Step S108). Then, the user terminal device A 100a starts transmission of communication data to the relay server device A 400a determined to be the gateway (Step S109). After the communication data is relayed among the relay server device A 400a, the relay server device B 400b, and the relay server device C 400c, the communication data is transmitted from a relay server device that is a gateway of the user terminal device B 100b selected from among the relay server device A 400a, the relay server device B 400b, and the relay server device C 400c to the user terminal device B 100b (Step S110).

As described above, the directory server device 200 transmits the connection destination list information in response to the connection destination information demand from the user terminal device A 100a. By authenticating the user terminal device A 100a by the authenticating server device 300 before the transmission of the connection destination list information, it is possible to prevent transmission of the connection destination list information to the fraudulent user terminal device A 100a, and to improve security of the network N. As can be seen, the authentication of the user terminal device performed for improvement of security of the network N is not performed in each relay server device that relays communication data, but is performed intensively by the authenticating server device 300 under the directory server device 200; therefore, it becomes possible to implement the authentication function easily, and to improve the efficiency of the authentication process.

### Second Embodiment

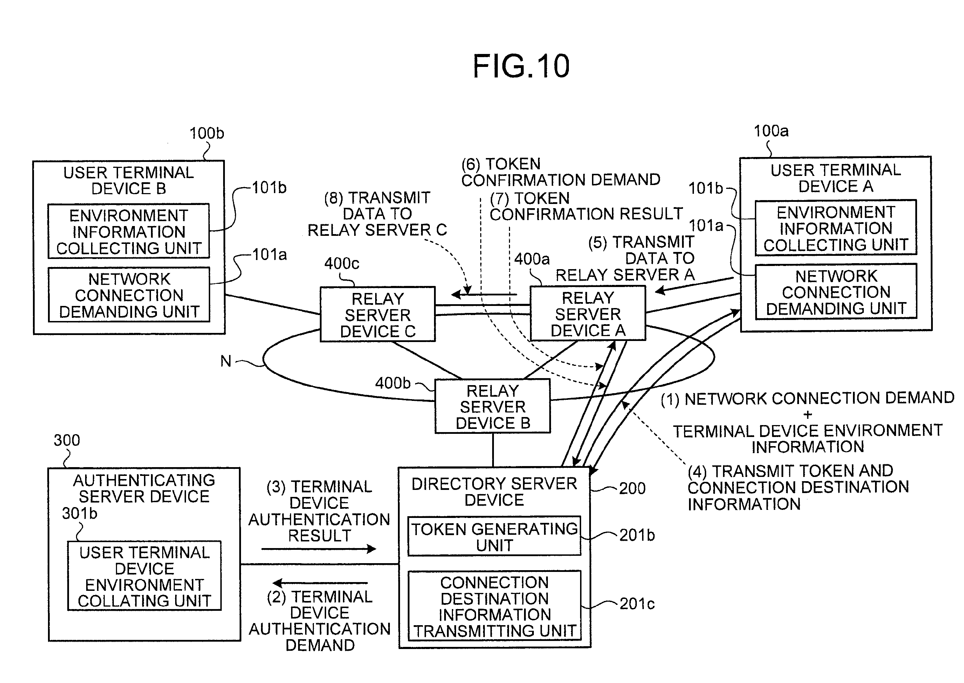

Next, a second embodiment of the present invention will be explained with reference to FIGS. 10 to 14. In the second embodiment, when a user terminal device performs communication with another user terminal device through a computer network, a directory server requests an authenticating server device to confirm a token in response to a relay server device that relays communication data issuing a demand to confirm the token added to the communication data, and the relay server device transfers the communication data to another relay server device or the other user terminal device in response to the token having been confirmed by the authenticating server device.

To realize the functions, in the second embodiment, functions and configuration necessary for confirming the user terminal device based on the token are added to the first embodiment. Especially, the directory server device and the relay server device of the second embodiment have additional functions as compared with those of the first embodiment. The user terminal device and the authenticating server device of the second embodiments are the same as those of the first embodiment, and thus the explanation is omitted.

First, the overview of a network connection terminal authentication system according to the second embodiment will be explained. FIG. 10 is a schematic for explaining the overview of the network connection terminal authentication system according to the second embodiment. As depicted in FIG. 10, the network configuration of the network connection terminal authentication system according to the second embodiment is the same as that discussed in the first embodiment.

First, a network connection demand and terminal device environment information are transmitted from the user terminal device A 100a to the directory server device 200 (FIG. 10(1)). The network connection demand is transmitted to the directory server device 200 by the network connection demanding unit 101a of the user terminal device A 100a. The terminal device environment information depicts a hardware configuration and a software configuration of the user terminal device A 100a collected by the environment information collecting unit 101b of the user terminal device A 100a, and is transmitted to the directory server device 200 through a predetermined interface of the user terminal device A 100a.

The directory server device 200 having received a network connection demand and terminal device environment information from the user terminal device A 100a demands the authenticating server device 300 to authenticate the user terminal device A 100a (FIG. 10(2)).

The authenticating server device 300 transmits the result of authenticating the user terminal device A 100a in response to the authentication demand from the directory server device 200 (FIG. 10(3)). In the directory server device 200, the connection destination information transmitting unit 201c transmits, to the user terminal device A 100a, connection destination information that is information on a path to a terminal device of a connection destination in the network N together with a token generated by the token generating unit 201b based on a terminal device authentication result received from the authenticating server device 300 (FIG. 10(4)).

The user terminal device A 100a having received the token and the connection destination information from the directory server device 200 transmits data to the relay server device A 400a to perform communication with the user terminal device B 100b based on information on a path in the network N indicated by connection destination information (FIG. 10(5)). The user terminal device A 100a adds the token received from the directory server device 200 to data transmitted to the user terminal device B 100b.

The relay server device A 100a having received the communication data to which the token is added transmits to the directory server device 200 a demand to confirm whether the token is legitimate (FIG. 10(6)). The directory server device 200 having received the token confirmation demand confirms whether the token is truly a token issued by the directory server device 200 itself, and transmits the confirmation result to the relay server device A 400a (FIG. 10(7)).

The relay server device A 400a having received the token confirmation result transmits data received from the user terminal device A 100a to the relay server device C 400c that is the next relay server device based on connection destination information when the token confirmation result indicates that the token is legitimate (FIG. 10(8)). On the other hand, the relay server device A 400a does not transmit to the relay server device C data received from the user terminal device A 100a when the token confirmation result indicates that the token is not legitimate.

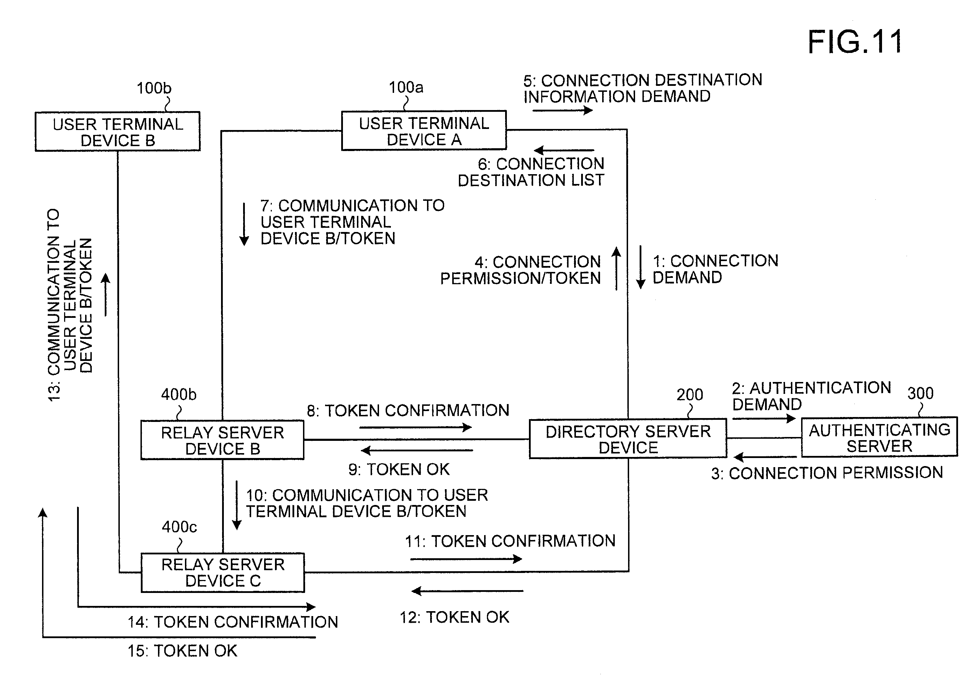

Next, data exchange in the network connection terminal authentication system according to the second embodiment will be explained. FIG. 11 is a schematic for explaining the overview of data exchange in the network connection terminal authentication system according to the second embodiment. As depicted in FIG. 11, first, 1: a connection demand is transmitted from the user terminal device A 100a to the directory server device 200. Then, when the directory server device 200 receives the connection demand from the user terminal device A 100a, 2: the directory server device 200 transmits an authentication demand to the authenticating server device 300.

Then, the authenticating server device 300 transmits to the directory server device 200 an authentication result of the user terminal device A 100a performed according to the authentication demand from the directory server device 200. Specifically, because connection to the network N is permitted by the authentication of the user terminal device A 100a in the authenticating server device 300, 3: the authenticating server device 300 transmits connection permission to the directory server device 200.

When the connection to the network N is not permitted by the authentication of the user terminal device A 100a in the authenticating server device 300, the authenticating server device 300 transmits connection refusal to the directory server device 200.

Then, 4: the directory server device 200 having received the connection permission from the authenticating server device 300 transfers connection permission to the user terminal device A 100a. The connection permission transmitted from the directory server device 200 to the user terminal device A 100a includes a token. 5: The user terminal device A 100a having received the connection permission from the directory server device 200 transmits a connection destination information demand to the directory server device 200.

Then, 6: the directory server device 200 having received the connection destination information demand from the user terminal device A 100a transmits a connection destination list in which the connection destination information are listed. In this way, the user terminal device A 100a can transmit communication data to the user terminal device B 100b.

Next, 7: the user terminal device A 100a transmits the communication data to the user terminal device B 100b. At this time, the token received from the directory server device 200 is added to the communication data. The communication data transmitted from the user terminal device A 100a to the user terminal device B 100b passes the relay server device A 400a, and the relay server device C 400c, and arrives at the user terminal device B 100b according to the description of the connection destination list.

8: The relay server device B 400b having received the communication data and the token from the user terminal device A 100a transmits a token confirmation demand to the directory server device 200. Then, 9: the directory server device 200 having received the token confirmation demand transmits to the relay server device B 400b the result of the token confirmation process. Specifically, the confirmation result is assumed to indicate that the token is legitimate.

10: The relay server device B 400b having obtained the confirmation result that the token is legitimate transmits further to the relay server device C 400c communication data addressed to the user terminal device B 100b together with the token. 11: The relay server device C 400c having received from the relay server device B 400b the communication data and the token transmits a token confirmation demand to the authenticating server device 300 through the directory server device 200. Then, 12: the authenticating server device 300 having received the token confirmation demand transmits the result of the token confirmation process to the relay server device C 400c through the directory server device 200. The confirmation result is also assumed to indicate that the token is legitimate.

Then, 13: the relay server device B 400b having obtained the confirmation result that the token is legitimate transfers the communication data to the user terminal device B 100b together with the token. Then, 14: the user terminal device B 100b having received the communication data from the relay server device C 400c inquires of the directory server device 200 whether the token added to the communication data is correct. Although not depicted, the communication path between the user terminal device B 100b and the directory server device 200 passes through the relay server device B 400b and the relay server device C 400c.

Then, 15: the directory server device 200 having received the inquiry for the token confirmation from the user terminal device B 100b performs token confirmation process, and when the token is determined to be correct, transmits to the user terminal device B 100b the information that the token is correct. When the token is not correct, the directory server device 200 transmits data indicating that the token is not correct to the user terminal device B 100b. Thus, the user terminal device B 100b can trust the communication data from the user terminal device A 100a.

As can be seen, because the directory server device confirms a token added to communication data from the user terminal device A 100a to the user terminal device B 100b at every data reception by each relay server device that relays data on a communication path, it becomes possible to cancel transmission of the illegitimate communication data in the middle of the communication path, and to improve security, and to suppress wasteful consumption of network bandwidth.

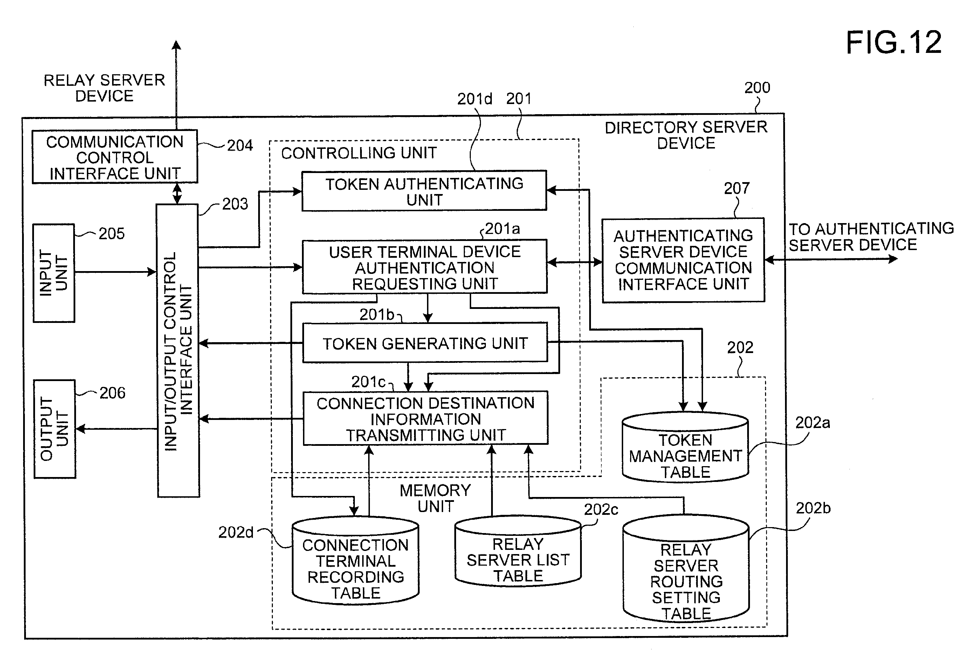

Next, the configuration of the directory server device 200 of the second embodiment will be explained. FIG. 12 is a functional block diagram of the configuration of the directory server device 200 depicted in FIG. 10. As depicted in FIG. 12, the directory server device 200 has the controlling unit 201, the memory unit 202, the input/output control interface unit 203, the communication control interface unit 204, the input unit 205, the output unit 206, and an authenticating server device communication interface unit 207. Because the directory server device 200 of the second embodiment is different from that in the first embodiment in the configuration of the controlling unit 201, only the difference is explained, and the explanation of other identical parts is omitted.

The controlling unit 201 of the directory server device 200 of the second embodiment further has a token authenticating unit 201d. The token authenticating unit 201d refers to the token management table 202a, and determines whether the token is a legitimate token registered in the token management table based on a token confirmation request received from the relay server device 400 or the user terminal device 100. Specifically, the token authenticating unit 201d determines whether the token matches the user terminal device to which the token is supposed to be added, whether the token matches a token that is supposed to be added to the user terminal device, or whether the token is not expired. Then, the determination result is transmitted to the relay server device 400 or the user terminal device 100 that has demanded the confirmation.

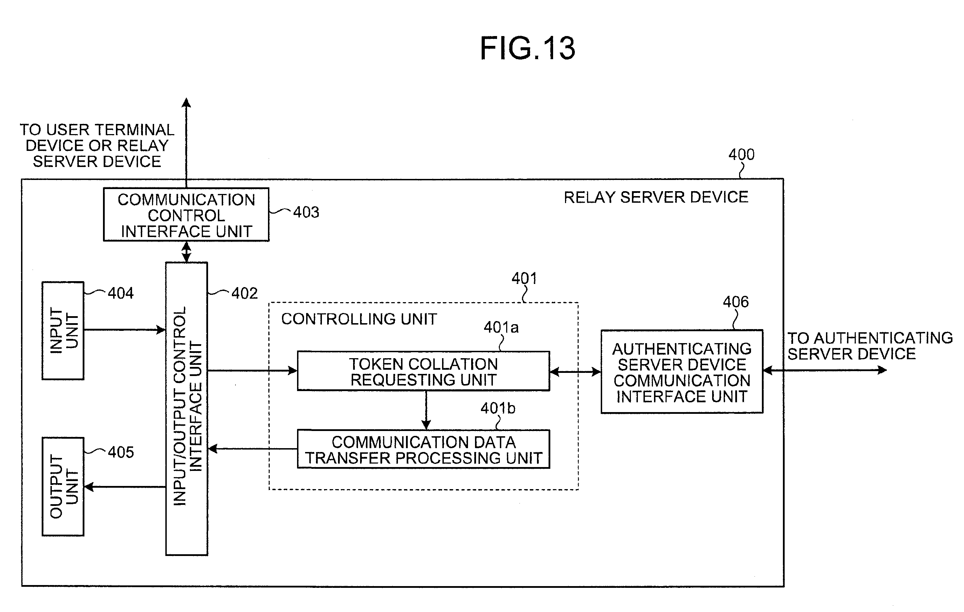

Next, the configuration of the relay sever device of the second embodiment will be explained. FIG. 13 is a functional block diagram for depicting the configuration of the relay server device 400 depicted in FIG. 10. As depicted in FIG. 13, the relay server device 400 has a controlling unit 401, an input/output control interface unit 402, a communication control interface unit 403, an input unit 404 that receives input operation through a keyboard, a mouse, or the like, an output unit 405 that is a display unit such as a display device, and an authenticating server device communication interface unit 406.

The controlling unit 401 has an internal memory that stores therein a computer program or control data defining a variety of processing procedures, and performs various processing through cooperation of these units. The controlling unit 401 has, in particular as those closely related to the present invention, a token collation requesting unit 401a, and a communication data transfer processing unit 401b.

The token collation requesting unit 401a extracts the token from the communication data received from another relay server device 400 or the user terminal device 100 that is the transmitter of the communication data, and transmits to the authenticating server device 300 a demand to confirm the token through the authenticating server device communication interface unit 406. When the confirmation result of the token received from the authenticating server device 300 is determined, and the confirmation result indicates that the token is legitimate, an instruction is output to the communication data transfer processing unit 401b so as to transfer the received communication data to another relay server device or the user terminal device 100 that is the transmission destination of the communication data. When the confirmation result indicates that the token is not legitimate, transfer of the received communication data to another relay server device or the user terminal device 100 that is the transmission destination of the communication data is not instructed, and an error message is displayed on the output unit 405.

The communication data transfer processing unit 401b having received the communication data from the token collation requesting unit 401a transmits the communication data to another relay server device or the user terminal device 100 that is the transmission destination of the communication data through the input/output control interface unit 402.

The input/output control interface unit 402 mediates exchange of communication data among the controlling unit 401, the communication control interface unit 403, the input unit 404, and the output unit 405.

The communication control interface unit 403 connects the relay server device 400 with the network N, and in particular mediates connection with the user terminal device 100 or the relay server device 400. The authenticating server device communication interface unit 406 mediates exchange of communication data among the controlling unit 401, and the authenticating server device 300.

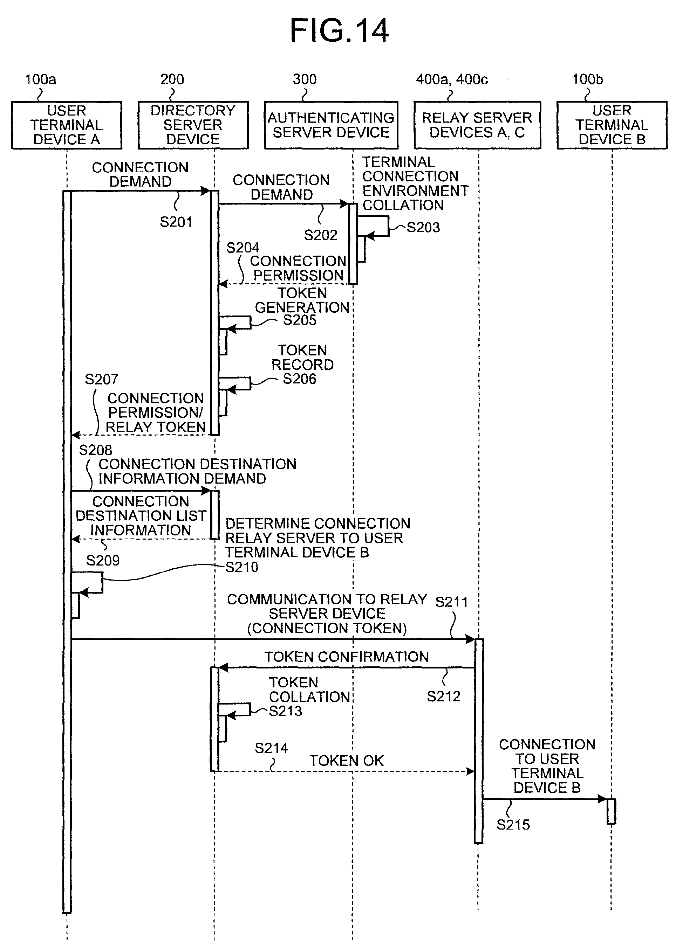

Next, the network connection terminal confirmation process performed in the network connection terminal authentication system depicted in FIG. 10 will be explained. FIG. 14 is a time chart of the processing procedures of the network connection terminal confirmation process performed in the network connection terminal authentication system depicted in FIG. 10.

As depicted in FIG. 14, first, the user terminal device A 100a transmits to the directory server device 200, a connection demand specifying the user terminal device B 100b as the connection destination user terminal device (Step S201). The directory server device 200 having received the connection demand transmits an authentication demand to the authenticating server device 300 (Step S202). The authenticating server device 300 having received the authentication demand performs user terminal device environment collating process in which the user terminal device is authenticated by comparing the hash value and determining the evaluation value of the terminal environment (Step S203).

Then, when the user terminal device is authenticated in the process of Step S203, the authenticating server device 300 notifies the directory server device 200 of permission of the authentication (Step S204). Then, the directory server device 200 having been notified by the authenticating server device 300 of the information of permission of authentication generates a token (Step S205), and records the generated token in the token management table 202a (Step S206). Then, the directory server device 200 transmits to the user terminal device A 100a information that connections with the user terminal device B 100b is permitted together with the token (Step S207).

When the user terminal device A 100a is not authenticated in the process of Step S203, the process at Steps S204 to S206 are not performed, and the authenticating server device 300 transmits to the directory server device 200 information that authentication is not permitted. The directory server device 200 having been notified by the authenticating server device 300 of information that authentication is not permitted transmits to the user terminal device A 100a information that connection with the user terminal device B 100b is not permitted, in place of the process at Step S207.

Then, the user terminal device A 100a having received from the directory server device 200 information that connection with the user terminal device B 100b is permitted transmits a demand for connection destination information to the directory server device 200 (Step S208). The directory server device 200 having received the demand for connection destination information transmits to the user terminal device A 100a the connection destination list information (Step S209).

Then, the user terminal device A 100a determines a relay server device to become a gateway for connection to the user terminal device B based on the connection destination list information received from the directory server device 200 (Step S210). Then, the user terminal device A 100a starts transmission of communication data to the relay server device A 400a determined to be the gateway (Step S211).

The relay server device A 400a having received the communication data from the user terminal device A 100a together with the token transmits to the directory server device 200 a demand to confirm the token (Step S212). The directory server device 200 having received the token confirmation demand from the relay server device A 400a refers to the token management table 202a, and determines whether the token is a legitimate token registered in the token management table (Step S213). Then, the directory server device 200 transmits to the relay server device A 400a the token confirmation result (Step S214).

At and after Step S214, after the communication data is relayed among the relay server device A 400a, the relay server device B 400b, and the relay server device C 400c, the communication data is transmitted to the user terminal device B 100b from a relay server device that is the gateway of the user terminal device B 100b selected from among the relay server device A 400a, the relay server device B 400b, and the relay server device C 400c. The relay server device A 400a, the relay server device B 400b, and the relay server device C 400c perform the same process as in Steps S212 to S214 at every reception of communication data.

When the relay server device that is the gateway of the user terminal device B 100b selected from among the relay server device A 400a, the relay server device B 400b, and the relay server device C 400c receives communication data, the relay sever device that is the gateway transmits the communication data to the user terminal device B 100b (Step S215).

### Third Embodiment

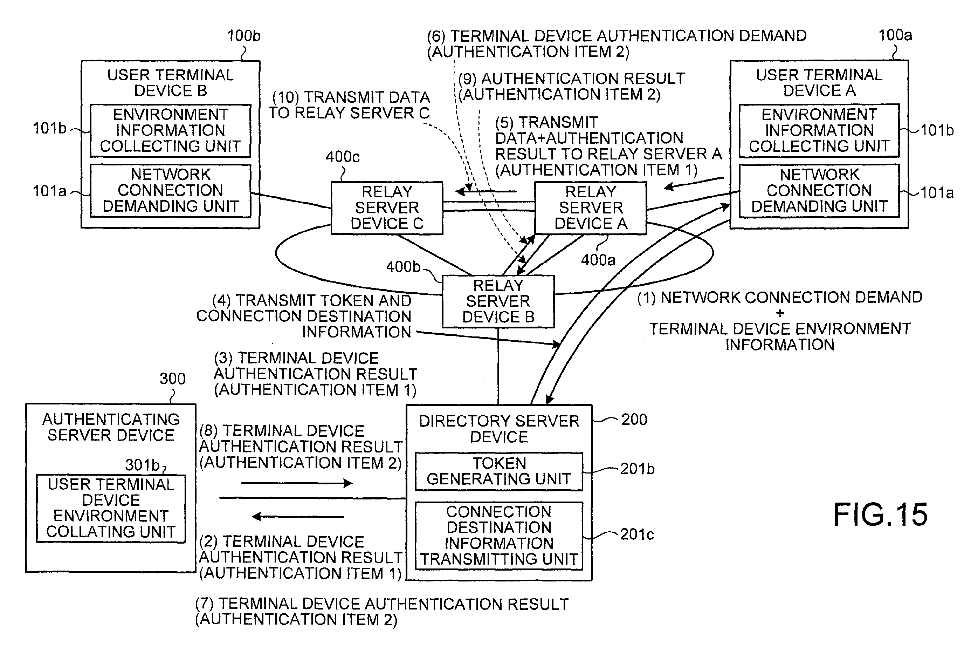

Next, a third embodiment of the present invention will be explained with reference to FIGS. 15 to 19. In the third embodiment, when a user terminal device performs communication with another user terminal device through a computer network, in response to a demand to confirm an authentication item that is deemed necessary to be confirmed other than a confirmed authentication item included in information that clarifies the confirmed authentication item added to the communication data by a relay server device that relays communication data, a directory server device requests an authenticating server device to confirm the authentication item, and in response to the authentication item being confirmed by the authenticating server device, the relay server device transfers the communication data to another relay server device, or another user terminal device. The authentication item is an item that is a basis of authentication when the authenticating server device is performed, and the confirmed authentication item is an authentication item based on which the authentication has been performed by the authenticating server device.

To realize the function, in the third embodiment, a function and a configuration necessary for confirming a user terminal device based on an authentication item confirmation demand from a relay server device are added to the first embodiment. In particular, the directory server device and the relay server device of the third embodiment have additional functions as compared with those of the first embodiment. The user terminal device and the authenticating server device of the third embodiment are the same as those of the first embodiment, and the explanation is omitted.

First, the overview of a network connection terminal authentication system according to the third embodiment will be explained. FIG. 15 is a schematic for explaining the overview of the network connection terminal authentication system according to the third embodiment. As depicted in FIG. 15, the network configuration of the network connection terminal authentication system according to the third embodiment is the same as that discussed in the first embodiment.

First, a network connection demand and terminal device environment information are transmitted from the user terminal device A 100a to the directory server device 200 (FIG. 15(1)). The network connection demand is transmitted to the directory server device 200 by the network connection demanding unit 101a of the user terminal device A 100a. The terminal device environment information indicates a hardware configuration and a software configuration of the user terminal device A 100a collected by the environment information collecting unit 101b of the user terminal device A 100a, and is transmitted to the directory server device 200 through a predetermined interface of the user terminal device A 100a.

The directory server device 200 demands the authenticating server device 300 to authenticate the user terminal device A 100a with the authentication item 1 when having received a network connection demand and terminal device environment information from the user terminal device A 100a (FIG. 15(2)).

The authenticating server device 300 transmits the result of authenticating the user terminal device A 100a regarding the authentication item 1 in response to the authentication demand from the directory server device 200 (FIG. 15(3)). In the directory server device 200, the connection destination information transmitting unit 201c transmits to the user terminal device A 100a connection destination information that is information on a path to a terminal device of a connection destination in the network N together with a token generated by the token generating unit 201b based on a terminal device authentication result received from the authenticating server device 300 (FIG. 15(4)).

The user terminal device A 100a having received a token and the connection destination information from the directory server device 200 transmits data to the relay server device A 400a to perform communication with the user terminal device B 100b based on information on a path in the network N indicated by connection destination information (FIG. 15(5)). The user terminal device A 100a adds to the data transmitted to the user terminal device B 100b information indicating a confirmed authentication item about which fulfillment condition of security or performance has been confirmed upon authentication by the authenticating server device 300(hereinafter, a confirmed authentication item). Here, information indicating that confirmation has been made regarding the authentication item 1 is added.

The relay server device A 400a having received communication data to which confirmed authentication information is added determines whether the relay server device A 400a has been authenticated based on an authentication item for which confirmation is demanded, and transmits to the directory server device 200 a demand to confirm an authentication item that has not yet been confirmed among the authentication items demanded to be confirmed regarding the relay server device A 400a (FIG. 15(6)). Here, the relay server device A 400a demands to confirm the authentication item 1, and the authentication item 2, but because the authentication item 1 has been confirmed, confirmation regarding the authentication item 2 is demanded. The directory server device 200 transmits further to the authenticating server device 300 an authentication item confirmation demand (authentication demand) regarding the authentication item 2 received from the user terminal device A 100a (FIG. 15(7)).

The authenticating server device 300 having received the authentication item confirmation demand from the directory server device 200 confirms the user terminal device A 100a regarding the authentication item, and transmits the confirmation result to the directory server device 200 (FIG. 15(8)). The directory server device 200 transmits the confirmation result further to the relay server device A 400a (FIG. 15(9)).

The relay server device A 400a having received the authentication item confirmation result, when it is determined by the authentication item confirmation result that the user terminal device A 100a meets conditions, transmits the data received from the user terminal device A 100a to the relay server device C 400c that is a next relay server device based on the connection destination information (FIG. 15(10)). On the other hand, the relay server device A 400a, when it is determined by the authentication item confirmation result that the user terminal device A 100a does not meet the conditions, does not transmit the data received from the user terminal device A 100a to the relay server device C 400c.

As can be seen, the confirmed authentication item added to the communication data from the user terminal device A 100a to the user terminal device B 100b is confirmed by the authenticating server device at every data reception by each relay server device that relays data on a communication path, and when an authentication item about which the relay server device needs confirmation is not confirmed yet, authentication is made regarding the authentication item. Accordingly, it becomes possible to cancel transmission of the communication data from the user terminal device that does not meet conditions about security and performance in the middle of the communication path, thereby to improve security, and it becomes possible to suppress wasteful consumption of network bandwidth.

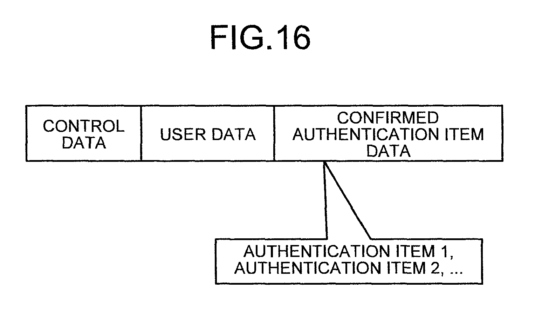

Next, data exchanged in the network connection terminal authentication system according to the third embodiment will be explained. FIG. 16 is a schematic for explaining the structure of data exchanged in the network connection terminal authentication system according to the third embodiment. As depicted in FIG. 16, the communication data exchanged in the network connection terminal authentication system includes a data block of control data, user data, and confirmed authentication item data. The control data relates to a communication protocol. The user data is data that is communicated. The confirmed authentication item data lists authentication items that have been confirmed when the user terminal device of the transmitter of the communication data is authenticated. An authentication item that has been confirmed in the authentication is added to the confirmed authentication item data. The confirmed authentication item data stores therein content of the same type as that indicated in the environment information table 102a in FIG. 4. In other words, the authentication item is of the same type as that indicated in the environment information table 102a in FIG. 4.

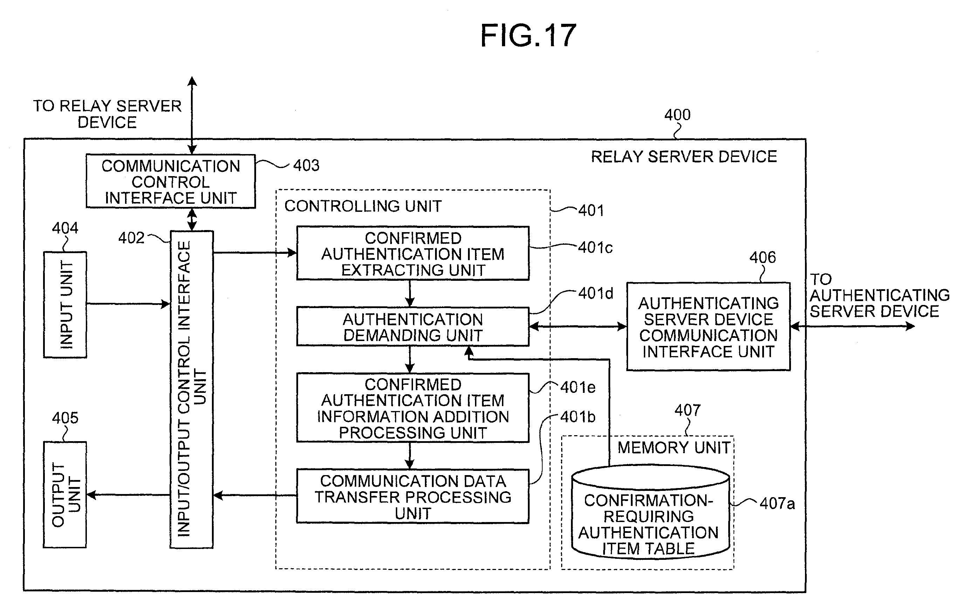

Next, the configuration of the relay sever device of the third embodiment will be explained. FIG. 17 is a functional block diagram of the configuration of the relay server device 400 depicted in FIG. 15. As depicted in FIG. 17, the relay server device 400 has the controlling unit 401, the input/output control interface unit 402, the communication control interface unit 403, the input unit 404 that receives input operation through a keyboard, a mouse, or the like, the output unit 405 that is a display unit such as a display device, an authenticating server device communication interface unit 406, and a memory unit 407.

The input/output control interface unit 402, the communication control interface unit 403, the input unit 404, the output unit 405, and the authenticating server device communication interface unit 406 of the relay server device 400 of the third embodiment are the same as those of the relay server device 400 of the second embodiment, and the explanation is omitted.

The controlling unit 401 has an internal memory that stores therein a computer program or control data defining a variety of processing procedures, and performs various processing through cooperation of these units. The controlling unit401 has, in particular as those closely related to the present invention, a confirmed authentication item extracting unit 401c, an authentication demanding unit 401d, a confirmed authentication item information addition processing unit 401e, and the communication data transfer processing unit 401b.

The confirmed authentication item extracting unit 401c extracts an added confirmed authentication item from the communication data received from the user terminal device 100 or another relay server device 400, and outputs the item to the authentication demanding unit 401d together with the communication data. The authentication demanding unit 401d refers to the confirmation-requiring authentication item table 407a of the memory unit 407 to determine an authentication item not included in the confirmed authentication items output from the confirmed authentication item extracting unit 401c among authentication items included in the confirmation-requiring authentication item table 407a, and requests the authenticating server device 300 to confirm the determined authentication item.

In response, if the authenticating server device 300 returns confirmation result indicating that the confirmation item has been confirmed, the confirmed authentication item information addition processing unit 401e is instructed to continue the process. If the authenticating server device 300 returns the confirmation result indicating that the confirmation item has not been authenticated, an error message is transmitted to the user terminal device 100 of the transmitter of the communication data.

The confirmed authentication item information addition processing unit 401e further adds to the communication data the authentication item that the authentication demanding unit 401d has demanded the confirmation, and has been authenticated by the authenticating server device 300, and outputs the communication data to the communication data transfer processing unit 401b.

The communication data transfer processing unit 401b having received communication data from the confirmed authentication item information addition processing unit 401e transmits the communication data to another relay server device or the user terminal device 100 that is the transmission destination of the communication data through the input/output control interface unit 402.

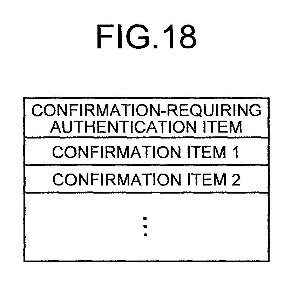

Next, the confirmation-requiring authentication item table depicted in FIG. 17 will be explained. FIG. 18 is a schematic for explaining the confirmation-requiring authentication item table depicted in FIG. 17. As depicted in FIG. 18, the confirmation-requiring authentication item table has a column for confirmation-requiring authentication items. Here, the relay server device 400 that stores therein the confirmation-requiring authentication item table stores items of terminal environment that demands the user terminal device 100 that is the transmitter of communication data for a security level and performance equal to or more than a certain level.

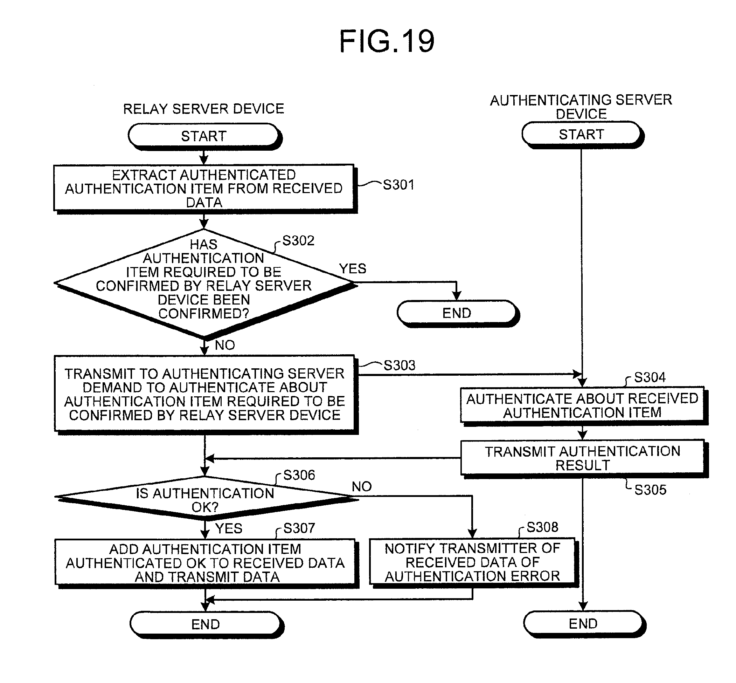

Next, the network connection terminal authentication process performed in the network connection terminal authentication system depicted in FIG. 15 will be explained. FIG. 19 is a flowchart for depicting the processing procedures of the network connection terminal authentication demanding process performed in the network connection terminal authentication system depicted in FIG. 15, and in particular for explaining the process performed between the authenticating server device 300, and the relay server device 400.

As depicted in FIG. 19, first, the confirmed authentication item extracting unit 401c of the relay server device 400 extracts a confirmed authentication item from the received data (Step S301). Then, the authentication demanding unit 401d of the relay server device 400 determines whether the authentication item for which confirmation is necessary by the relay server device has already been confirmed (Step S302). When it is determined that the authentication item for which confirmation is necessary by the relay server device has already been confirmed (Yes at Step S302), the process ends, and when it is determined that the authentication item for which confirmation is necessary by the relay server device has not been confirmed yet (No at Step S302), the process proceeds to Step S303.

In Step S303, the authentication demanding unit 401d of the relay server device 400 transmits an authentication demand to the authenticating server device 300 regarding the authentication item for which confirmation is necessary by the relay server device 400.

In the authenticating server device 300 having received an authentication demand from the relay server device 400, the user terminal device hash value/evaluation value calculating unit 301a instructs the user terminal device 100 to extract and transmit the same type of record as the instructed authentication item. Then, the environment information received from the user terminal device 100 is hashed, and output to the user terminal device environment collating unit 301b together with the environment information and the hash value received from the user terminal device 100. The user terminal device environment collating unit 301b compares the hash value received from the user terminal device 100, and the environment information hashed by the user terminal device hash value/evaluation value calculating unit 301a to determine whether they match with each other. The evaluation values corresponding to all the received environment information are evaluated by referring to the terminal device environment evaluation information table 302a based on the environment information received from the user terminal device 100. In this way, the authenticating server device 300 performs authentication about the received authentication item (Step S304). The authenticating server device 300 transmits the authentication result to the relay server device 400 (Step S305).

The relay server device 400 having received from the authenticating server device 300 the authentication result determines whether the authentication result is positive (Step S306). When the authentication result is determined to be positive (Yes at Step S306), an authentication item about which authentication is positive is added to the received data, and the data is transferred to another relay server device or the user terminal device of the connection destination (Step S307). On the other hand, when the authentication result is not determined to be positive (No at Step S306), an authentication error is transmitted to the user terminal device that is the transmitter of the received data, and communication data is not transferred to another relay server device or the user terminal device of the connection destination (Step S308).

Each process explained in the first to the third embodiments can be realized by performing a previously prepared program on a computer system such as a personal computer, a server device, or a workstation. In the following, an example of a computer system that realizes each process will be explained.

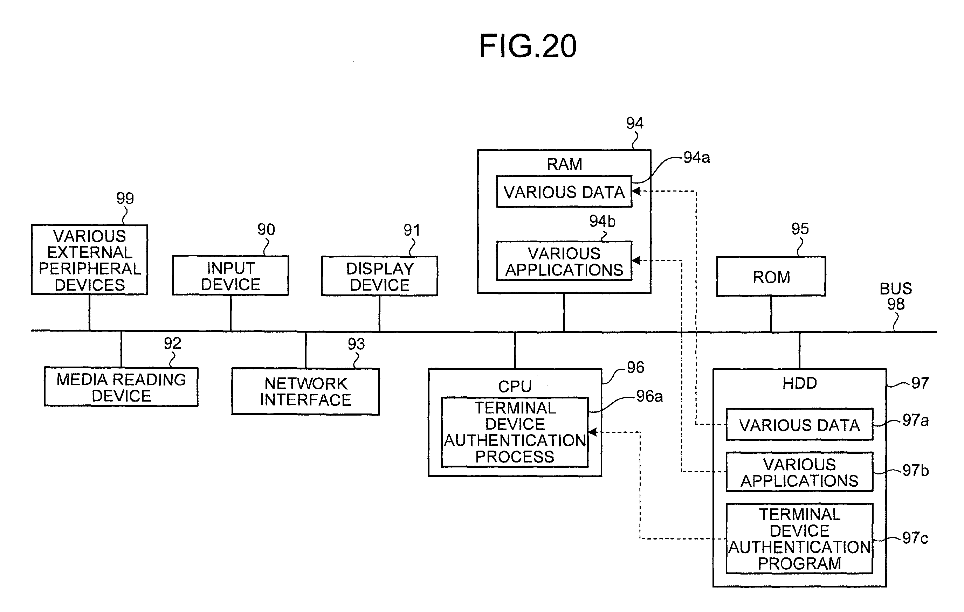

FIG. 20 is a diagram of the hardware configuration of the computer system to become the user terminal device 100, the directory server device 200, the authenticating server device 300, or the relay server device 400 depicted in FIGS. 3, 5, 7, 12, and 13. The computer system is configured by connecting, with a bus 98, an input device 90 that receives data input by a user, a display device 91 that displays data, a media reading device 92 that reads a computer program from a recording medium in which various computer programs are recorded, a network interface 93 that exchanges data with another computer through a network, a RAM (Random Access Memory) 94, a ROM (Read Only Memory) 95, a CPU (Central Processing Unit) 96, an HDD (Hard Disk Drive) 97, and various external peripheral devices 99 that are kinds of hardware environment of the device.

The HDD 97 stores a terminal device authentication program 97c that exhibits a function similar to that of the user terminal device 100, the directory server device 200, the authenticating server device 300, or the relay server device 400. The terminal device authentication program 97c may be dispersedly stored as required. The CPU 96 reads out the terminal device authentication program 97c from the HDD 97, and performs the computer program to activate a terminal device authentication process 96a.

The terminal device authentication process 96a corresponds to a functioning unit of the environment information collecting unit 101b of the user terminal device 100 of the first embodiment depicted in FIG. 3, each functional unit of the user terminal device authentication requesting unit 201a, and the token generating unit 201b of the directory server device 200 of the first embodiment depicted in FIG. 5, and each functional unit of the user terminal device hash value/evaluation value calculating unit 301a, and the user terminal device environment collating unit 301b of the authenticating server device 300 of the first embodiment depicted in FIG. 7. The terminal device authentication process 96a corresponds to each functional unit of the user terminal device authentication requesting unit 201a, the token generating unit 201b, and the token authenticating unit 201d of the directory server device 200 of the second embodiment depicted in FIG. 12, a functional unit of the token collation requesting unit 401a of the relay server device 400 of the second embodiment depicted in FIG. 13, and each functional unit of the confirmed authentication item extracting unit 401c, the authentication demanding unit 401d, and the confirmed authentication item information addition processing unit 401e of the relay server device 400 of the third embodiment depicted in FIG. 17.

The HDD 97 stores various data 97a. The various data 97a corresponds to data of the environment information table 102a stored in the memory unit 102 in the user terminal device 100 of the first embodiment depicted in FIG. 3, each data of the token management table 202a, the relay server device routing setting table 202b, the relay server device list table 202c, and the connection terminal recording table 202d stored in the memory unit 202 of the directory server device 200 of the first and the second embodiments depicted in FIGS. 5 and 12, and data of the terminal device environment evaluation information table stored in the memory unit 302 of the authenticating server device 300 of the first embodiment depicted in FIG. 7. Moreover, the various data 97a corresponds to data of the confirmation-requiring authentication item table 407a of the memory unit 407 of the relay server device 400 of the third embodiment depicted in FIG. 17.

The CPU 96 stores the various data 97a or various applications 97b in the HDD 97, reads out the various data 97a or the various applications 97b from the HDD 97, and stores them in the RAM 94, and performs various data processing based on various data 94a or various applications 94b stored in the RAM 94.

Meanwhile, the terminal device authentication program 97c needs not be stored in the HDD 97 from the beginning. For example, each computer program may be stored in "a portable physical media" such as a flexible disk (FD), a CD-ROM, a DVD disk, an magneto-optical disk, an integrated circuit mounted card inserted into a computer, "an installed physical media" such as a hard disk drive (HDD) provided inside or outside of the computer, and further "another computer" connected to the computer through a public line, the Internet, a LAN, a WAN, or the like, and the computer may read out each computer program from any of them, and performs it.

Although embodiments of the present invention have been explained so far, the present invention is not limited thereto, but can be implemented in various different embodiments within scope of technical ideas described in claims. Effects are not limited to those described in the embodiments.

In the first to the third embodiments, when the user terminal device 100 is authenticated by the authenticating server device 300, the directory server device 200 issues a token that is valid for a certain period to the user terminal device 100. The user terminal device 100 adds the token to communication data to the connection destination user terminal device 100 to indicate that the communication data is legitimate when the communication data passes the relay server device 400, and it becomes possible to relay data smoothly. However, it is not limited to the token, but may be a one-time password that is valid only once, or a ticket.

In the first to the third embodiments, the directory server device 200, and the authenticating server device 300 are implemented in separate computer systems. However, it is not limited thereto, but both the devices may be implemented in a single computer system.

Among the processes explained in the present embodiments, all or a part of the processes explained to be performed automatically may be performed manually, or all or a part of the processes explained to be performed manually may be performed automatically by a known method.

In addition, the processing procedures, the control procedures, the specific names, the information including various data and parameters discussed in the above description and depicted in the figures can be changed, unless otherwise noted.

Each component of in the device in the figures is depicted only functionally conceptually, and it is not required to be configured physically as depicted. In other words, the specific mode of distribution/integration of each device is not limited to that depicted in the figures, but all or a part of it may be distributed or integrated functionally or physically in an optional unit according to various load, usage or the like.

Furthermore, all or a part of each processing function performed in each of the devices may be realized by a CPU and a computer program that is performed or analyzed by the CPU, or may be realized as a hardware by wired logic.

### INDUSTRIAL APPLICABILITY

The present invention is useful when in a quarantine network it is desired to improve the efficiency of implementing an authentication function that authenticates a computer that demands connection to the quarantine network, and to improve efficiency of process of the authentication function.

## Claims

1. A network connection terminal authenticating method that authenticates a terminal device that demands communication with other terminal device in a computer network, the network connection terminal authenticating method comprising:
a terminal device authentication step of authenticating the terminal device outside a communication path between the terminal device and the other terminal device in response to a demand for communication of the terminal device with the other terminal device and determining whether communication with the other terminal device is permitted, and
a data transmission step of starting transmission of data from the terminal device to the other terminal device when the terminal device is authenticated in the terminal device authentication step.

2. The network connection terminal authenticating method according to claim 1, further comprising a communication path information notification step of notifying the terminal device of information of the communication path between the terminal device and the other terminal device, the information being stored outside the communication path between the terminal device and the other terminal device, when the terminal device is authenticated in the terminal device authentication procedure.

3. The network connection terminal authenticating method according to claim 2, wherein in the communication path information notification step, authentication information indicating that the terminal device has been authenticated in the terminal device authentication step is notified together with the communication path information.

4. The network connection terminal authenticating method according to claim 3, wherein in the data transmission step, the authentication information is added to data to be transmitted to the other terminal device and is transmitted.

5. The network connection terminal authenticating method according to claim 4, further comprising a re-authentication demanding step of demanding re-authentication of the terminal device based on the authentication information added to the data in a relay device having received the data in the communication path between the terminal device and the other terminal device indicated by the communication path information or the other terminal device, wherein
in the terminal device authentication step, the terminal device is re-authenticated in response to a demand in the re-authentication demanding step, and it is determined whether communication with the other terminal device is permitted.

6. The network connection terminal authenticating method according to claim 5, further comprising a data transfer step of transferring from the relay device to other relay device or the other terminal device the data together with the authentication information when the terminal device is re-authenticated in the terminal device authentication step.

7. The network connection terminal authenticating method according to claim 4, wherein in the data transmission step, together with the authentication information, an authentication item based on which the authentication is performed is further added and transmitted.

8. The network connection terminal authenticating method according to claim 7, further comprising a re-authentication demanding step of demanding re-authentication of the terminal device based on an authentication item about which the relay device is demanded in authentication of the terminal device other than the authentication item added to the data, in the relay device having received the data in the communication path between the terminal device and the other terminal device indicated by the communication path information, wherein
in the terminal device authentication step, the terminal device is re-authenticated in response to a demand in the re-authentication demanding step, and it is determined whether communication with the other terminal device is permitted.

9. The network connection terminal authenticating method according to claim 8, further comprising a data transfer step of further adding an authentication item based on which the relay device has authenticated the terminal device to the data and the authentication information, and transferring the data and the authentication information from the relay device to the other relay device or the other terminal device when the terminal device is re-authenticated in the terminal device authentication step.

10. A network connection terminal authentication program that authenticates a terminal device that demands communication with other terminal device in a computer network, the program causing a computer to perform:
a terminal device authentication procedure of authenticating the terminal device outside a communication path between the terminal device and the other terminal device in response to a demand for communication of the terminal device with the other terminal device and determining whether communication with the other terminal device is permitted, and
a data transmission procedure of starting transmission of data from the terminal device to the other terminal device when the terminal device is authenticated in the terminal device authentication procedure.

11. The network connection terminal authentication program according to claim 10, the program further causing the computer to perform a communication path information notification procedure of notifying the terminal device of information of the communication path between the terminal device and the other terminal device, the information being stored outside the communication path between the terminal device and the other terminal device, when the terminal device is authenticated in the terminal device authentication procedure.

12. The network connection terminal authentication program according to claim 11, wherein in the communication path information notification procedure, authentication information indicating that the terminal device has been authenticated in terminal device authentication procedure is notified together with the communication path information.

13. The network connection terminal authentication program according to claim 12, wherein in the data transmission procedure, the authentication information is added to data to be transmitted to the other terminal device and is transmitted.

14. The network connection terminal authentication program according to claim 13, the program further causing the computer to perform a re-authentication demanding procedure of demanding re-authentication of the terminal device based on the authentication information added to the data in a relay device having received the data in the communication path between the terminal device and the other terminal device indicated by the communication path information or the other terminal device, wherein
in the terminal device authentication procedure, the terminal device is re-authenticated in response to a demand in the re-authentication demanding procedure, and it is determined whether communication with the other terminal device is permitted.

15. The network connection terminal authentication program according to claim 14, the program further causing the computer to perform a data transfer procedure of transferring from the relay device to the other relay device or the other terminal device the data together with the authentication information when the terminal device is re-authenticated in the terminal device authentication procedure.

16. The network connection terminal authentication program according to claim 13, wherein in the data transmission procedure, together with the authentication information, an authentication item based on which the authentication is performed is further added and transmitted.

17. The network connection terminal authentication program according to claim 16, the program further comprising a re-authentication demanding procedure of demanding re-authentication of the terminal device based on an authentication item about which the relay device is demanded in authentication of the terminal device other than the authentication item added to the data, in the relay device having received the data in the communication path between the terminal device and the other terminal device indicated by the communication path information, wherein
in the terminal device authentication procedure, the terminal device is re-authenticated in response to a demand in the re-authentication demanding procedure, and it is determined whether communication with the other terminal device is permitted.

18. The network connection terminal authentication program according to claim 17, the program further comprising a data transfer procedure of further adding an authentication item based on which the relay device has authenticated the terminal device to the data and the authentication information, and transferring the data and the authentication from the relay device to the other relay device or the other terminal device when the terminal device is re-authenticated in the terminal device authentication procedure.

19. A network connection terminal authenticating apparatus that authenticates a terminal device that demands communication with other terminal device in a computer network, the network connection terminal authenticating apparatus comprising a terminal device authenticating unit that authenticates the terminal device outside the communication path between the terminal device and the other terminal device in response to a demand for communication between the terminal device and the other terminal device, and that determines whether communication with the terminal device is permitted.

20. The network connection terminal authenticating apparatus according to claim 19, wherein the terminal device authenticating unit re-authenticates the terminal device in response to a demand from a relay device arranged on a communication path between the terminal device and the other terminal device or from the other terminal device, and determines whether communication with the other terminal device is permitted.

21. A communication path information memory device that stores information about a communication path between a terminal device that demands communication with another terminal device in a computer network and the other terminal device, the communication path information memory device comprising a communication path information notifying unit that notifies the terminal device of the communication path information when the terminal device is authenticated by a network connection terminal authenticating apparatus that authenticates the terminal device in the computer network.

22. The communication path information memory device according to claim 21, wherein the communication path information notifying unit notifies authentication information indicating that the terminal device has been authenticated by the network connection terminal authenticating apparatus together with the communication path information.

23. A terminal device that demands a network connection terminal authenticating apparatus arranged outside a communication path with another terminal device in a computer network to authenticate the terminal device, the terminal device comprising:
a data transmitting unit that starts transmission of data to the other terminal device when the terminal device is authenticated by the network connection terminal authenticating apparatus, wherein
the data transmitting unit adds authentication information indicating that the terminal device has been authenticated by the network connection terminal authenticating apparatus to the data, and transmits the data.

24. The terminal device according to claim 23, wherein the data transmitting unit further adds an authentication item based on which the network connection terminal authenticating apparatus has authenticated the terminal device to the data, and transmits the data.

25. A relay device that is arranged on a communication path between a terminal device and another terminal device, and that relays data transmitted by the terminal device to the other terminal device in response to the terminal device having been authenticated by a network connection terminal authenticating apparatus, the relay device comprising a re-authentication demanding unit that demands re-authentication of the terminal device based on authentication information, added to the data, indicating that the terminal device has been authenticated by the network connection terminal authenticating apparatus.

26. The relay device according to claim 25, the device further comprising a data transferring unit that transfers the data to another relay device or the other terminal device together with the authentication information when a network connection terminal authenticating apparatus that re-authenticates the terminal device in response to a demand from the terminal device and that determines whether communication with the other terminal device is permitted re-authenticates the terminal device.

27. A relay device that is arranged on a communication path between a terminal device and other terminal device, and that relays data transmitted from the terminal device to the other terminal device in response to the terminal device having been authenticated by a network connection terminal authenticating apparatus, the relay device comprising a re-authentication demanding unit that demands re-authentication of the terminal device based on an authentication item, added to the data, based on which the network connection terminal authenticating apparatus has authenticated the terminal device.

28. The relay device according to claim 27, the relay device further comprising a data transferring unit that adds the authentication item to the data and transfers the data to another relay device or the other terminal device when the terminal device is re-authenticated by the network connection terminal authenticating apparatus that re-authenticates the terminal device in response to a demand from the terminal device and determines whether communication with the other terminal device is permitted.
